(19) **Europäisches Patentamt / European Patent Office / Office européen des brevets**

(11) **EP 3 072 360 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(51) Int Cl.:
**H05B 37/02** *(2006.01)*   **H05B 33/08** *(2006.01)*

(21) Anmeldenummer: **14802061.3**

(22) Anmeldetag: **21.11.2014**

(86) Internationale Anmeldenummer:
**PCT/EP2014/075295**

(87) Internationale Veröffentlichungsnummer:
**WO 2015/075187 (28.05.2015 Gazette 2015/21)**

(54) **GEREGELTE FARBLICHTQUELLE**

CONTROLLED COLOR LIGHT SOURCE

SOURCE DE LUMIÈRE COLORÉE RÉGULÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2013 DE 102013112906**

(43) Veröffentlichungstag der Anmeldung:
**28.09.2016 Patentblatt 2016/39**

(73) Patentinhaber: **SCHOTT AG**
**55122 Mainz (DE)**

(72) Erfinder:
- **WÖLFING, Bernd**
  **55122 Mainz (DE)**
- **REICHERT, Thomas**
  **55263 Wackernheim (DE)**
- **DIETRICH, Andreas**
  **55452 Guldental (DE)**
- **HATZENBÜHLER, Andreas**
  **55546 Neu-Bamberg (DE)**
- **BLEISINGER, Björn**
  **55499 Riesweiler (DE)**
- **SPRZAGALA, Marc Timon**
  **55129 Mainz (DE)**
- **CRAMER, Martin**
  **65187 Wiesbaden (DE)**
- **KEIPER, Oliver**
  **65510 Hünstetten (DE)**
- **MATTHEIS, Sandra**
  **Eltville 65343 (DE)**

(74) Vertreter: **Blumbach · Zinngrebe Patentanwälte PartG mbB**
**Alexandrastraße 5**
**65187 Wiesbaden (DE)**

(56) Entgegenhaltungen:
WO-A1-2012/130497   DE-A1-102010 043 296
DE-A1-102010 043 828   US-A1- 2005 200 315
US-A1- 2006 245 174   US-A1- 2010 096 993

EP 3 072 360 B1

**Beschreibung**

Die Erfindung betrifft allgemein Lichtquellen auf Basis von Leuchtdioden. Insbesondere betrifft die Erfindung regelbare Farblichtquellen, die in Bezug auf Helligkeit und/oder Farbton regelbar sind.

LED-Beleuchtungsquellen werden vielfach dazu eingesetzt, energiesparende und flexible Beleuchtungen bereitzustellen. Gegenüber Gasentladungslampen zeichnen sich Lichtquellen mit Leuchtdioden unter anderem dadurch aus, dass diese einfacher zu dimmen sind. Mit einer Kombination verschiedenfarbiger LEDs können auch nahezu beliebige Farbtöne eingestellt werden.

Leuchtdioden zeichnen sich auch dadurch aus, dass diese im Allgemeinen kleine Leuchtflächen mit hoher Leuchtdichte aufweisen. Abhängig von der Anwendung wird gegebenenfalls aber auch eine größere Leuchtfläche oder eine diffuse Beleuchtung gewünscht. Um dies zu erreichen, ist es aus dem Stand der Technik bekannt, Lichtleiter einzusetzen, welche das von den Leuchtdioden erzeugte Licht verteilen. Eine solche LED-Beleuchtungseinrichtung ist beispielsweise aus der WO 2012/130497 A1 bekannt. In diesem Stand der Technik wird eine LED-Beleuchtungseinrichtung mit zwei voneinander getrennten Lichtleitern beschrieben, die so angeordnet sind, dass jeweils eine Stirnfläche des einen Lichtleiters jeweils einer Stirnfläche des anderen Lichtleiters zugewandt ist und einen Zwischenbereich bilden, in dem im Betriebszustand die Strahlung zumindest einer LED durch die an den Zwischenbereich angrenzenden Stirnflächen in die Lichtleiter eingekoppelt und in den Lichtleitern geführt wird, wobei die Außenumfangsflächenbereiche der Lichtleiter Mittel zum Auskoppeln von Strahlung aufweisen, welche die in den Lichtleitern geführte Strahlung in die Lichtleiter hinein reflektieren, so dass im Betriebszustand die Strahlung unter Durchtritt durch die Lichtleiter lateral aus den Lichtleitern ausgekoppelt wird.

Mit einer solchen Anordnung wird ein linienförmiges Beleuchtungsprofil mit einem Öffnungswinkel, der einer Leuchtstoffröhre mit Reflektor entsprechen kann, erzielt.

Der LED und/oder dem Chip ist eine Auswerte- und Regelelektronik zugeordnet, welche den Farbort und/oder die Helligkeit bestimmt, woraufhin die LED bzw. der LED-Chip so angesteuert wird, dass bestimmte Betriebszustände der LED eingestellt werden. Durch gezielte Ansteuerung der Elemente des Chips erfolgt eine Farbmischung der emittierten Strahlung. So kann Licht einer beliebigen Farbe von der LED und somit der Beleuchtungseinrichtung emittiert werden. Der Farbort kann allerdings abhängig von den Umgebungsbedingungen, und vom Alter der LED variieren. Diese Variation kann nicht determiniert werden, weshalb der Sensor die Intensität der Strahlung und deren Farbort messen soll. Durch Berücksichtigung dieser Werte bei der Ansteuerung der LED bzw. LED-Chips können ein reproduzierbarer und dauerhaft stabiler Farbort sowie eine reproduzierbare und dauerhaft stabile Intensität der von der Beleuchtungseinrichtung emittierten Strahlung erreicht werden.

Nun wäre es ausgehend von der WO 2012/130497 A1 wünschenswert, einen Farbort exakt und eine gewünschte Farbortveränderung schnell einstellen zu können. Wird, wie in der WO 2012/130497 A1 vorgeschlagen, ein Lichtsensor verwendet, der auf einem LED-Chip integriert ist, besteht das Problem, dass das vom Sensor erfasste Licht einen Farbton aufweisen kann, der sich vom emittierten Licht unterscheidet, etwa, wenn aufgrund der Anordnung unterschiedliche Anteile des emittierten Lichts der Leuchtdioden auf den Sensor gelangt. Wird der Sensor andererseits im beleuchteten Raum angeordnet, stört dies aus baulichen und ästhetischen Gründen. Andere ähnliche Dokumente nach dem Stand der Technik sind US2010/0096993 und US2006/0245174.

Der Erfindung liegt mithin die Aufgabe zu Grunde, eine geregelte Farblichtquelle mit Lichtleiter und Reflektorschicht auf Basis von Halbleiter-Lichtquellen bereitzustellen, die eine hohe Effizienz hat, einen einfachen Aufbau aufweist, eine schnelle Reaktion auf Farbort- und Intensitätsvorgaben ermöglicht und dabei eine hohe Genauigkeit von Farbort- und Intensität aufweist, um visuelle Unterschiede zwischen verschiedenen Lichtquellen zu minimieren bzw. zu vermeiden.

Diese Aufgabe wird durch den Gegenstand des Anspruchs 1 gelöst. Vorteilhafte Ausgestaltungen und Weiterbildungen der Erfindung sind in den abhängigen Ansprüchen angegeben. Demgemäß sieht die Erfindung eine Lichtquelle mit zumindest zwei Halbleiter-Leuchtelementen vor, wobei die Halbleiter-Leuchtelemente Licht unterschiedlicher Farbe emittieren, wobei die Lichtquelle einen Lichtleiter umfasst, in welchen das von den Halbleiter-Leuchtelementen emittierte Licht zumindest teilweise eingekoppelt wird. Der Lichtleiter ist so ausgebildet, dass das von den Halbleiter-Leuchtelementen eingekoppelte Licht seitlich aus dem Lichtleiter austritt.

Die Lichtquelle umfasst weiterhin eine Steuerungselektronik, mit welcher die Helligkeit der Halbleiter-Leuchtelemente einstellbar ist, sowie einen Lichtsensor, der so angeordnet ist, dass dieser das von den Halbleiter-Lichtquellen eingekoppelte und seitlich aus dem Lichtleiter austretende Licht empfängt. Die Steuerungselektronik mit Lichtsensor ist dazu eingerichtet, die Sensorsignale über ein Integrationszeitintervall zu akkumulieren, sowie die akkumulierten Signale des Lichtsensors mit einem Sollwert oder Sollbereich zu vergleichen und die Helligkeit der Halbleiter-Lichtquellen in Abhängigkeit vom Unterschied der Sensorsignale zum Sollwert oder Sollbereich zu ändern.

Unter dem Begriff Unterschied ist im Sinne der Erfindung zu verstehen, dass eine Abweichung, insbesondere eine Größenabweichung oder ein Abstand zwischen dem Sensorsignal und dem Sollwert oder Sollbereich besteht. Sofern also eine Abweichung zwischen dem Sensorsignal und dem Sollwert oder Sollbereich besteht, erfolgt erfindungs-

EP 3 072 360 B1

gemäß eine Änderung der Helligkeit der Halbleiter-Lichtquelle in Abhängigkeit von der Größe dieser Abweichung.

Das Integrationszeitintervall ist dabei vorzugsweise das für eine analoge Signalintegration verwendete Zeitintervall. Es besteht auch die Möglichkeit, digitalisierte Signale aufzuintegrieren oder zu mitteln.

Allerdings ergibt sich hierbei ein zusätzliches Quantisierungsrauschen, was nachteilig für die Genauigkeit der Farbregelung ist.

Gemäß einer Ausführungsform der Erfindung ist die Steuerungselektronik dazu eingerichtet, das Integrationszeitintervall abhängig vom Abstand zum Sollwert oder Sollbereich zu ändern, indem bei größerem Abstand ein kürzeres Integrationszeitintervall eingestellt wird. Das Integrationszeitintervall wird also abhängig vom Abstand des Sensorsignals zum Sollwert oder Sollbereich geändert, indem für einen größeren Abstand ein kürzeres Integrationszeitintervall eingestellt wird, als bei einem kürzeren Abstand.

Gemäß noch einer Ausführungsform der Erfindung ist die Steuerungselektronik dazu eingerichtet, das Integrationszeitintervall abhängig von der Änderung des Sollwerts zu ändern. Ändert sich der Sollwert, so ändert sich entsprechend auch der Abstand des Sollwerts oder Sollbereichs zum Sensorsignal, welches durch die Regelung der Steuerungselektronik im Allgemeinen auf den zuvor geltenden Sollwert oder Sollbereich eingeregelt ist.

Beide zuvor beschriebenen Ausführungsformen können selbstverständlich auch miteinander kombiniert werden.

Insbesondere bei sehr großen und schnellen Änderungen des durch den Sollwert oder Sollbereich vorgegebenen Farborts kann gemäß noch einer Ausführungsform der Erfindung die Regelung mittels der Sensorwerte kurzzeitig auch ganz ausgeschaltet werden. Der Farbort wird dann zunächst ungefähr mittels abgespeicherter Werte durch entsprechende Versorgungsströme und/oder Spannungen an den Halbleiter-Leuchtelementen ungefähr eingestellt. Danach kann dann der genaue Farbort wieder mit der Rückkopplung anhand der Sensorwerte erfolgen. Gemäß dieser Ausführungsform ist die Steuerungselektronik also dazu eingerichtet, bei einer Änderung des Sollwerts oder Sollbereichs die Helligkeit der Halbleiter-Leuchtelemente anhand abgespeicherter Werte voreinzustellen und anschließend den Farbort genauer anhand eines Vergleichs der Sensorsignale zum Sollwert oder Sollbereich einzustellen.

Mit der Erfassung des seitlich ausgekoppelten Lichts durch den Sensor wird zunächst einmal sichergestellt, dass der Sensor das tatsächlich von der Lichtquelle emittierte und im Lichtleiter gemischte Licht der einzelnen Halbleiter-Leuchtelemente empfängt. Damit wird eine farbgetreue Einstellung ermöglicht. Mit der Anpassung der Integrationszeiten der Sensorsignale ist es nun möglich, eine exakte Einstellung des Farborts der Lichtquelle auch mit sehr kleinen Sensorsignalen sicherzustellen. Damit kann der Sensor nun auch so verbaut oder angeordnet werden, dass dieser nur wenig Licht empfängt und damit nicht das Beleuchtungsfeld der Lichtquelle stört, ohne auf eine schnelle Einstellung des Farborts verzichten zu müssen. Ist eine schnelle und große Änderung des Farborts gewünscht, wird durch die erfindungsgemäße Lichtquelle zunächst mit kurzen Integrationszeiten eine schnelle, ungefähre Anpassung an den gewünschten Farbort, dann eine exakte Einstellung mit durch die längeren Integrationszeiten entsprechend genaueren Werten des Lichtsensors vorgenommen.

Die Steuerungselektronik ist in Weiterbildung der Erfindung zu diesem Zweck eingerichtet, das Integrationszeitintervall abhängig vom Abstand zum Sollwert oder Sollbereich innerhalb eines Bereichs zwischen 10 Millisekunden und 5 Sekunden, vorzugsweise innerhalb eines Bereichs zwischen 15 Millisekunden und 3 Sekunden einzustellen. Gemäß einem Ausführungsbeispiel wird das Integrationszeitintervall kontinuierlich oder in zumindest zwei Stufen zwischen 20 Millisekunden und 2 Sekunden geändert.

Die Anforderungen einer schnellen Reaktion auf eine Farbortänderung und einer hohen Genauigkeit der Farborteinstellung lassen sich normalerweise nur erfüllen, wenn viel Licht auf den Sensor fällt. Mit der Erfindung wird demgegenüber sowohl eine hohe Genauigkeit, als auch eine schnelle Reaktion auf eine Änderungsanforderung ermöglicht.

Um einer hohen Effizienz der Lichtquelle Rechnung zu tragen, ist vorzugsweise ein Reflexionselement vorgesehen, welches so angeordnet ist, dass dieses einen Teil des seitlich aus dem Lichtleiter emittierten Lichts reflektiert. Da mit der Erfindung nun also auch mit sehr geringen Lichtintensitäten am Sensor eine exakte Farborteinstellung möglich wird, kann der Lichtsensor nun so angeordnet werden, dass dieser das aus dem Lichtleiter seitlich austretende und durch das Reflexionselement hindurchtretende Licht empfängt. Das Reflexionselement kann aufgrund der erfindungsgemäßen Anpassung der Integrationszeit der Steuerung dabei so ausgelegt werden, dass der Anteil des hindurchtretenden Lichts sehr gering ist. Dies ist günstig, um eine hohe Effizienz der Lichtquelle zu erzielen. So ist in Weiterbildung der Erfindung vorgesehen, dass das Reflexionselement so ausgebildet ist, dass weniger als 20%, vorzugsweise höchstens 5% des auf das Reflexionselements (9) auftreffenden Lichts durch das Reflexionselement (9) hindurchtritt. Der Sensor empfängt also dementsprechend nur einen sehr kleinen Anteil des auf das Reflexionselement auftreffenden Lichts. Bevorzugt lässt das Reflexionselement aber zumindest im Bereich, von welchem der Lichtsensor Licht erfasst, mehr als 2%, um eine hinreichend gute Empfindlichkeit zu erzielen.

Für eine kompakte Bauweise der Lichtquelle wird bevorzugt, dass das Reflexionselement durch eine Reflexionsschicht gebildet wird, welche sich um einen Teil des Umfangs des Lichtleiters erstreckt. Auf diese Weise können die seitlichen Abmessungen der Lichtquelle gering gehalten werden, da die Reflexionsschicht und der Lichtleiter eine Einheit

3

bilden.

Um eine gute Durchmischung des Lichts der einzelnen Halbleiter-Lichtquellen bei dem vom Lichtsensor erfassten Licht zu erhalten, ist es weiterhin günstig, wenn das von Lichtsensor empfangene Licht in einem gewissen Abstand vom Lichteintrittsende, beziehungsweise von der Stirnseite oder Stirnfläche des Lichtleiters herausgestreut wird. Wird Licht ausgewertet, welches nahe an der Stirnseite herausgestreut wird, können die Intensitätsanteile der Halbleiter-Leuchtelemente unterschiedlich sein. Gemäß einer Weiterbildung der Erfindung ist daher vorgesehen, dass der Lichtsensor so angeordnet ist, dass dieser Licht empfängt, welches in einem Abstand zu einer Stirnfläche des Lichtleiters entlang der Lichtleitungsrichtung des Lichtleiters seitlich emittiert wird, wobei der Abstand mindestens dem zweifachen, bevorzugt mindestens dem dreifachen der Querabmessung des Lichtleiters entspricht.

Ein großer Farbraum kann abgedeckt werden, wenn die Halbleiter-Leuchtelemente eine vierfarbige LED-Anordnung umfassen. Dabei wird zumindest eine rot emittierende, zumindest eine grün oder gelb emittierende, zumindest einer blau emittierende und zumindest eine weißes Licht emittierenden Leuchtdiode vorgesehen. So können beispielsweise durch Beimischung des Lichts einer oder mehrerer der rot-, grün- und blau-emittierenden Leuchtdioden zum Licht einer oder mehrerer weiß emittierender Leuchtdioden die Farbtemperatur des weißen Lichts variiert werden. Für Leuchtdioden und Laser als Halbleiter-Leuchtelemente werden folgende Spektralbereiche des emittierten Lichts bevorzugt: blaues Licht: 430 Nanometer bis 480 Nanometer Wellenlänge, grünes Licht: 500 Nanometer bis 560 Nanometer Wellenlänge, rotes Licht: mindestens 600 Nanometer, vorzugsweise 600 bis 660 Nanometer Wellenlänge.

Die Erfindung zeigt ihre besonderen Vorteile insbesondere in Verbindung mit einem Echtfarbsensor, der die Farbempfindlichkeit des Auges nachbildet. Mit einem solchen Sensor kann eine sehr genaue, auf die Augenempfindlichkeit abgestimmte Farbort-Einstellung vorgenommen werden. Solche Sensoren weisen im Allgemeinen mehrere Sensorfelder mit dichroitischen Farbfiltern auf, wobei die Farbfilter die spektrale Empfindlichkeit der Zäpfchen des menschlichen Auges nachbilden. Da dichroitische Filter eine deutliche Winkelabhängigkeit aufweisen, ist es weiterhin günstig, den Winkelbereich des einfallenden Strahlenbündels zu begrenzen. Dazu kann eine geeignete Blendeneinrichtung eingesetzt werden. Nachteilig ist hier nun, dass die Empfindlichkeit eines solchen Sensors durch das Abblenden und Filtern verhältnismäßig klein ist. Durch die erfindungsgemäße Regelung der Farborteinstellung mit Anpassung der Integrationszeit wird nun dieser Nachteil ausgeglichen. In Weiterbildung der Erfindung ist daher ein Lichtsensor mit mehreren Sensorfeldern mit unterschiedlichen dichroitischen Filtern und einer Blendeneinrichtung vorgesehen, welche den Winkelbereich des auf die Sensorfelder fallenden, vom Lichtleiter seitlich emittierten Lichts auf kleiner als +/- 15 ° begrenzt. Generell wird auch ohne Beschränkung auf den speziellen Typ des Lichtsensors bevorzugt, wenn der Lichtsensor bereits dazu ausgebildet ist, Farbwerte als x, y, I-Koordinaten als Sensorwerte bereitzustellen. Dies erleichtert die Verarbeitung der Sensorwerte durch die Steuerungselektronik.

Die Erfindung wird nachfolgend genauer und anhand der beigeschlossenen Figuren und Ausführungsbeispiele beschrieben. In den Figuren bezeichnen gleiche Bezugszeichen dabei gleiche oder entsprechende Elemente. Es zeigen:

Fig. 1        einen schematischen Aufbau eines Ausführungsbeispiels der Erfindung,

Fig. 2        schematisch den Aufbau eines Lichtsensors,

Fig. 3        in Form eines Diagramms einen zeitlichen Ablauf der Änderung eines Sollwerts des Farborts und des Integrationszeitintervalls,

Fig. 4, 5     Aufsichten auf eine Stirnfläche des Lichtleiters mit daran angeordneten Halbleiter-Leuchtelementen,

Fig. 6        eine Beleuchtungseinrichtung mit mehreren Lichtquellen,

Fig. 7        einen Bereich zwischen zwei hintereinander angeordneten Lichtleitern zweier Lichtquellen,

Fig. 8        eine Ausführungsform mit einem Lichtmischer und einer Lichtumlenkung vor Einkopplung in den Lichtleiter, und

Fig. 9        Beispiele von Formen der Grundfläche des Lichtmischers der erfindungsgemäßen optischen Anordnung.

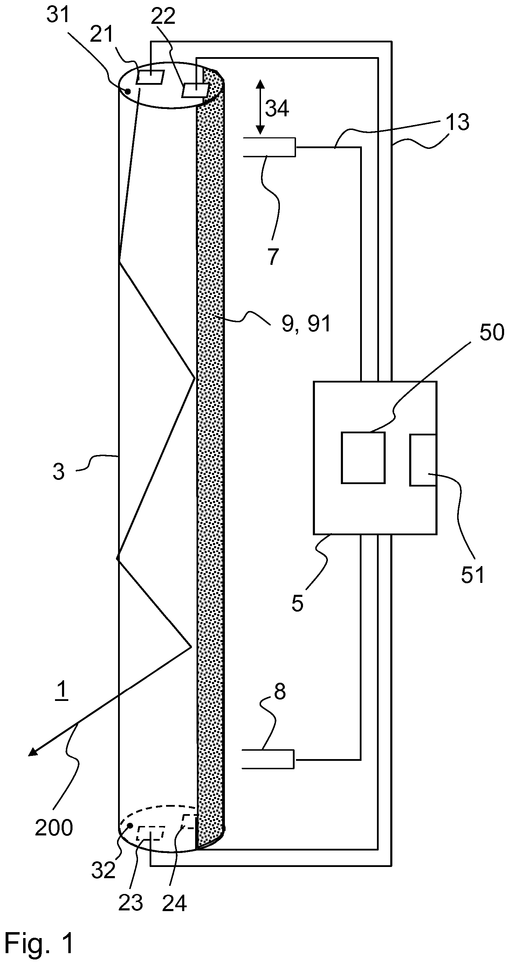

Wie bei dem in Fig. 1 schematisch dargestellten Ausführungsbeispiel umfasst eine erfindungsgemäße Lichtquelle 1 zumindest zwei Halbleiter-Leuchtelemente 21, 22. Diese emittieren Licht unterschiedlicher Farbe. Dies bedeutet, dass sich das Licht der beiden Halbleiter-Leuchtelemente im Farbort unterscheidet. Demgemäß können auch beispielsweise zwei weißes Licht emittierende Halbleiter-Leuchtelemente vorgesehen werden, die Licht mit unterschiedlicher Farbtemperatur emittieren. Beispielhaft seien zwei Halbleiter-Leuchtelemente 21, 22 genannt, die Weißlicht mit 2700 K und 7000 K emittieren. Besonders bevorzugt werden ohne Beschränkung auf das spezielle Ausführungsbeispiel der Fig. 1 Leuchtdioden als Halbleiter-Leuchtelemente verwendet.

Die Lichtquelle 1 umfasst weiterhin einen Lichtleiter 3, in welchen das von den Halbleiter-Leuchtelementen 21, 22 emittierte Licht zumindest teilweise eingekoppelt wird. Bevorzugt wird ein länglicher Lichtleiter, bei welchem das Licht in zumindest eine der Stirnflächen 31, 32 eingekoppelt wird. Ein Lichtstrahl 200, der von der Halbleiter-Lichtquelle 21 emittiert wird, ist zur Verdeutlichung eingezeichnet. Das von den Halbleiter-Leuchtelementen 21, 22 in den Lichtleiter 3 an der Stirnfläche 31 eingekoppelte Licht wird, wie beispielhaft anhand des Lichtstrahl 200 dargestellt, durch Totalreflexion im Lichtleiter 3 entlang dessen Längsrichtung geführt. Die Längsrichtung stellt damit bei einem länglichen Lichtleiter, wie ihn das Beispiel der Fig. 1 zeigt, auch die Lichtleitungsrichtung des Lichtleiters 3 dar.

Der Lichtleiter 3 ist so ausgebildet, dass das von den Halbleiter-Leuchtelementen 21, 22 eingekoppelte Licht seitlich aus dem Lichtleiter 3 austritt. Die seitliche Auskopplung wird besonders bevorzugt durch Lichtstreuung erreicht. Wird das Licht gestreut, kann durch die bei der Streuung verursachte Richtungsänderung der Totalreflexionswinkel überschritten werden, so dass der Lichtstrahl seitlich durch die Mantelfläche des Lichtleiters 3 austritt. Der Lichtleiter 3 ist dazu mit entsprechenden lichtstreuenden Strukturen versehen.

Vorzugsweise, ohne Beschränkung auf das spezielle in Fig. 1 gezeigte Ausführungsbeispiel wird ein Glas- oder Kunststoffstab als Lichtleiter 3 verwendet. Der Lichtleiter kann mit einem Material mit niedrigerem Brechungsindex ummantelt oder auch zumindest teilweise mantellos sein.

Die Halbleiter-Leuchtelemente 21, 22 sind über elektrische Verbindungen 13 an einer Steuerungselektronik 5 angeschlossen. Diese Steuerungselektronik 5 ist dazu eingerichtet, die Helligkeit der Halbleiter-Leuchtelemente 21, 22, etwa bei Leuchtdioden als Halbleiter-Leuchtelemente über eine geeignete Regelung des Versorgungsstroms einzustellen. Insbesondere werden ohne Beschränkung auf das Ausführungsbeispiel die Helligkeiten der einzelnen Halbleiter-Leuchtelemente getrennt voneinander durch die Steuerungselektronik 5 eingestellt. Werden mehrere Halbleiter-Leuchtelemente des gleichen Farbtons verwendet, würde als beispielsweise das Halbleiter-Leuchtelement 21 durch zwei gleichartige Leuchtelemente ersetzt, so können diese hinsichtlich des Farbtons gleichartigen Halbleiter-Leuchtelemente aber auch durch einen gemeinsamen Steuerungskanal der Steuerungselektronik 5 in der Helligkeit geregelt werden.

Außerdem umfasst die Lichtquelle 1 einen Lichtsensor 7, der so angeordnet ist, dass dieser das von den Halbleiter-Lichtquellen 21, 22 eingekoppelte und seitlich aus dem Lichtleiter 3 austretende Licht. Der Lichtsensor 7 ist ebenfalls über eine elektrische Verbindung an die Steuerungselektronik angeschlossen. Die Steuerungselektronik 5 ist nun dazu eingerichtet, die über die elektrische Verbindung 13 übertragenen Sensorsignale über ein Integrationszeitintervall zu akkumulieren und die akkumulierten Signale des Lichtsensors 7 mit einem Sollwert oder Sollbereich zu vergleichen. Ohne Beschränkung auf das in Fig. 1 gezeigte Beispiel gibt dieser Sollwert oder Sollbereich vor, welcher Farbton einschließlich der Helligkeit, beziehungsweise Lichtintensität von der Lichtquelle 1 abgegeben werden soll. Die Helligkeit der Halbleiter-Lichtquellen 21, 22 wird dazu von der Steuerungselektronik 5 in Abhängigkeit vom Unterschied der Sensorsignale zum Sollwert oder Sollbereich geändert.

Ohne Beschränkung auf das spezielle dargestellte Ausführungsbeispiel kann der Unterschied der Sensorsignale zum Sollwert oder Sollbereich als Größe deren Abweichung beispielsweise durch Bildung einer Differenz oder auch eines Quotienten erfolgen. Demgemäß kann die Steuerungselektronik 5 eine Differenz zwischen dem Sensorsignal und dem Sollwert oder dem zum Sensorsignal näherliegenden Grenzwert eines Sollbereichs ermitteln und die Helligkeit dann in Abhängigkeit der Größe dieser Differenz regeln. Möglich ist wie gesagt auch die Bestimmung eines Quotienten aus Sollwert und Sensorsignalen. Je größer dann die Abweichung von einem Soll-Quotienten, beispielweise von eins ist, desto größer ist entsprechend der Unterschied von Sollwert (oder Sollbereich) und Sensorsignal.

Um einerseits eine hohe Genauigkeit bei der Einstellung der Helligkeiten der einzelnen Halbleiter-Leuchtelemente 21, 22 und damit des Farbtons des insgesamt von der Lichtquelle 1 abgegebenen Lichts zu erzielen und andererseits auch eine im Bedarfsfall schnelle Regelung zu erzielen, wird das Integrationszeitintervall von der Steuerungselektronik abhängig vom Abstand der Sensorsignale zum Sollwert oder Sollbereich zu geändert, indem bei zwei unterschiedlich großen Abständen für den größeren der beiden Abstände ein kürzeres Integrationszeitintervall eingestellt wird, als bei dem kleineren der beiden Abstände. Auf diese Weise kann die Lichtquelle 1 bei einer Anforderung eines geänderten Farborts schnell auf einen ungefähren Wert des angeforderten Farbtons regeln und dann mit längeren Integrationszeitintervallen eine genaue Einregelung des Zielwerts durchführen.

Die Regelung inklusive der Einstellung des Integrationszeitintervalls wird vorzugsweise durch einen Mikrocontroller 50 als Bestandteil der Steuerungselektronik 5 vorgenommen.

Um eine Farbortänderung oder allgemeiner eine Anforderung zur Einstellung eines bestimmten Farborts an die Lichtquelle 1 zu übertragen, weist diese vorzugsweise, ohne Beschränkung auf die spezielle Ausgestaltung der Fig. 1 eine Schnittstelle 51 auf, über welche Farbortdaten, beispielsweise durch eine übergeordnete Steuerung an die Lichtquelle 1 kommuniziert werden. Alternativ oder zusätzlich kann eine solche Anforderung aber auch von der Steuerungselektronik 5 selbst ausgelöst werden. Als Beispiele seien eine uhrzeitabhängige oder über einen Sensor erfasste Umgebungslicht-abhängige Regelung durch die Steuerungselektronik genannt.

Wie weiterhin in Fig. 1 als Beispiel dargestellt, kann der Lichtleiter zwei Stirnflächen 31, 32 an gegenüberliegenden Enden aufweisen, wobei für beide Stirnflächen 31, 32 jeweils zumindest zwei Halbleiter-Leuchtelemente 21, 22, 23, 24 so angeordnet sind, dass deren emittiertes Licht in den Lichtleiter 1 durch die jeweilige Stirnfläche (31, 32) eingekoppelt wird. Im Speziellen sind bei dem in Fig. 1 gezeigten Beispiel die beiden bereits erwähnten Halbleiter-Leuchtelemente 21, 22 an der Stirnfläche 31 und zwei weitere Leuchtelemente 23, 24 an der anderen Stirnfläche 32 angeordnet, so dass an beiden Enden des Lichtleiters 3 Licht der jeweiligen dort angeordneten Leuchtelemente 21, 22, beziehungsweise 23, 24 eingekoppelt wird.

Gemäß einer Ausführungsform der Erfindung werden alle Halbleiter-Leuchtelemente 21, 22, 23, 24 an beiden Stirnflächen 31, 32 des Lichtleiters 3 von der Steuerungselektronik 5 in ihrer Helligkeit abhängig von den Sensorsignalen des Sensors 7 geregelt.

Gemäß noch einer Ausführungsform der Erfindung kann die Lichteinkopplung in die beiden Stirnflächen 31, 32 aber auch getrennt geregelt werden. Dies ist technisch zwar aufwändiger, allerdings können unter anderem unterschiedliche alterungsbedingte Verschiebungen des Farbtons ausgeglichen werden.

Gemäß einer weiteren Ausführungsform der Erfindung ist ohne Beschränkung auf den speziellen in Fig. 1 gezeigten Aufbau ein erster Lichtsensor 7 und ein zweiter Lichtsensor 8 vorgesehen. Die Lichtsensoren 7, 8 sind jeweils einer der Stirnflächen 31, 32 zugeordnet, derart, dass jeder der Lichtsensoren 7, 8 jeweils einen größeren Anteil des in die diesem Lichtsensor 7, 8 zugeordnete Stirnfläche eingekoppelten Lichts empfängt. Dies wird in einfacher Weise dadurch erzielt, dass die Lichtsensoren 7, 8 jeweils nahe an einer der Stirnflächen 31, 32 angeordnet sind. Damit aber eine gute Durchmischung des Lichts der einzelnen Halbleiter-Leuchtelemente am Ort des Sensors erhalten wird, ist es günstig, einen gewissen Abstand 34 in Längsrichtung des Lichtleiters 3 zwischen dem Lichtsensor 7, 8 und der zugeordneten Stirnfläche 31, beziehungsweise 32 einzuhalten. Vorzugsweise wird daher der Lichtsensor 7, 8 so angeordnet dass dieser Licht empfängt, welches im zweifachen, vorzugsweise mindestens dreifachen Abstand der Querabmessung des Lichtleiters 3 seitlich emittiert wird. Blickt der Lichtsensor 7, 8 also senkrecht auf die Reflexionsschicht 91, so wird bei dem in Fig. 1 gezeigten runden Lichtleiter der Abstand 34 so gewählt, dass dieser mindestens dem zweifachen, vorzugsweise mindestens dem dreifachen Durchmesser des Lichtleiters entspricht.

Die Steuerungselektronik 5 ist eingerichtet, die Halbleiter-Leuchtelemente 21, 22, 23, 24 an jeder der Stirnflächen 31, 32 getrennt voneinander und abhängig von den Sensorsignalen des der jeweiligen Stirnfläche 31, 32 zugeordneten Lichtsensors 7, 8 zu regeln. Die Regelung der Helligkeit der Halbleiter-Lichtquellen 21, 22, sowie 23, 24 erfolgt jedoch vorzugsweise durch Vergleich der akkumulierten Signale der jeweiligen Lichtsensoren 7, 8 mit einem gemeinsamen Sollwert oder Sollbereich. Demgemäß wird in dieser Weiterbildung durch die Regelung an beiden Enden des Lichtleiters 3 auf den gleichen über den Sollwert oder Sollbereich vorgegebenen Farbort eingeregelt.

Die Lichtquelle 1 weist weiterhin ein Reflexionselement 9 auf. Das Reflexionselement 9 ist so angeordnet, dass dieses einen Teil des seitlich aus dem Lichtleiter emittierten Lichts reflektiert. Insbesondere wird mit dem Reflexionselement 9 ein Kreisbogen um die Mittellinie des Lichtleiters 9 abgedeckt, so dass das seitlich im zu dem Kreisbogen korrespondierenden Winkelabschnitt austretende Licht reflektiert wird. Die Lichtquelle 1 kann dann so verbaut werden, dass das Reflexionselement 9 das reflektierte Licht in den zu beleuchtenden Raum abstrahlt. Mit diesem Reflexionselement 9 wird demgemäß bei einem Einbau in eine Wand, eine Decke oder einen Fußboden eine höhere Effizienz erzielt. Der Lichtsensor 7, beziehungsweise in der dargestellten Weiterbildung der Erfindung beide Lichtsensoren 7, 8 sind nun so angeordnet, dass diese das aus dem Lichtleiter 3 seitlich austretende und durch das Reflexionselement 9 hindurchtretende Licht empfangen. Beim Ein- oder Anbau in ein Strukturelement, wie einer Wand, einer Decke oder dem Boden eines Fahrzeugs oder Gebäudes sind damit die Lichtsensoren bei Betrachtung der Lichtquelle 1 damit betrachterseitig hinter dem Lichtleiter 3 angeordnet und damit nicht sichtbar.

Besonders bevorzugt wird das Reflexionselement 9 weiterhin, wie auch bei dem in Fig. 1 gezeigten Beispiel durch eine Reflexionsschicht 91 gebildet, welche sich um einen Teil des Umfangs des Lichtleiters 3 erstreckt. Gemäß noch einer Weiterbildung der Erfindung sorgt das Reflexionselement gleichzeitig auch für eine Streuung des im Lichtleiter 3 geleiteten Lichts. Dazu ist das Reflexionselement 9 zumindest teilweise diffus reflektierend ausgebildet, so dass im Lichtleiter 3 geleitetes Licht gestreut wird, so dass das gestreute und dabei diffus reflektierte Licht aus dem Lichtleiter 3 seitlich austritt. Das Licht tritt seitlich dabei dann aus, wenn der Grenzwinkel der Totalreflexion an der Wandung des Lichtleiters 3 aufgrund der zuvor erfolgten Streuung überschritten wird. Mit anderen Worten dient auf diese Weise das Reflexionselement 9, beziehungsweise die Reflexionsschicht 91 gleichzeitig als Einrichtung zum Auskoppeln des Lichts aus dem Lichtleiter 3.

Ein derartiges diffus reflektierendes Reflexionselement kann mit einer Schicht mit hochbrechenden Partikeln, vorzugsweise Partikel mit einem Brechungsindex $n>2$ hergestellt werden. Geeignet hierfür ist eine Beschichtung mit Titanoxid- oder Nioboxid-Partikeln. Besonders bevorzugt werden die hochbrechenden Partikel in einer Silikonmatrix eingebettet. Demgemäß ist in Weiterbildung der Erfindung, ohne Beschränkung auf die speziellen, in den Figuren dargestellten Ausführungsformen ein Reflexionselement 9 in Gestalt einer Silikonbeschichtung mit darin eingebetteten lichtstreuenden Partikeln vorgesehen, wobei die Partikel vorzugsweise einen Brechungsindex größer als zwei aufweisen.

Durch die Anordnung des oder der Sensoren 7, 8 hinter der Reflexionsschicht 91, beziehungsweise allgemeiner hinter dem Reflexionselement 9 verringert sich die auf den jeweiligen Sensor 7, 8 auftreffende Lichtmenge allerdings beträchtlich. Damit der Sensor 7, 8 in der Lage ist, das durch den Lichtleiter 3 geleitete Licht noch durch das Reflexionselement 9 hindurch zu messen, wird das Reflexionselement 9 so ausgebildet, dass weniger als 30%, vorzugsweise höchstens 20%, bevorzugt aber auch mehr als 5% des auf das Reflexionselements 9 auftreffenden, im Lichtleiter geleiteten Lichts durch das Reflexionselement 9 hindurchtritt.

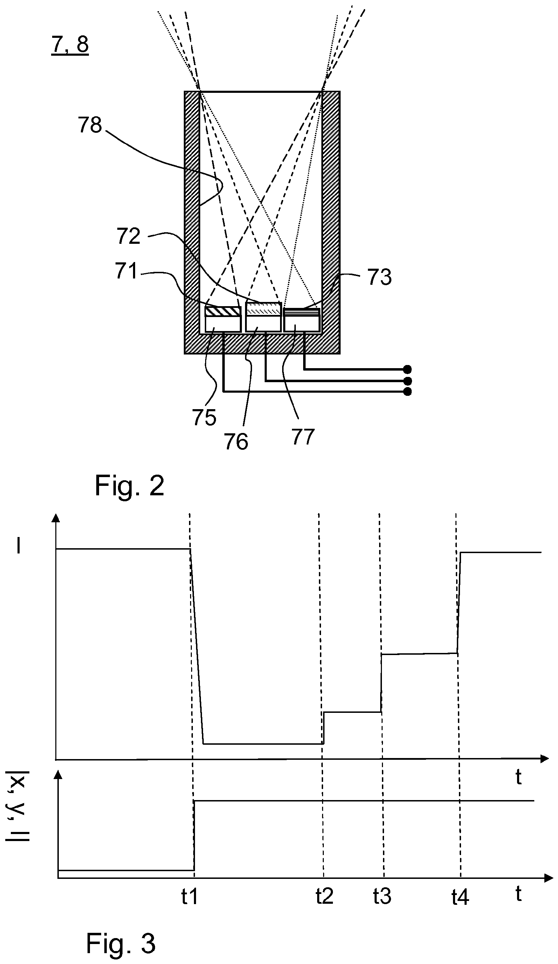

Bei der exakten Einstellung eines Farborts ergibt sich die weitere Schwierigkeit, dass einfache lichtempfindliche Sensoren Kennlinien aufweisen, die mit der Augenempfindlichkeit nicht oder allenfalls schlecht übereinstimmen. Um bestimmte Farb- und/oder Helligkeitseindrücke exakt einstellen zu können, eignet sich aber ein Lichtsensor 7,8, der mehrere Sensorfelder mit unterschiedlichen dichroitischen, beziehungsweise dielektrischen Filtern und einer Blendeneinrichtung 78 aufweist, welche den Winkelbereich des auf die Sensorfelder fallenden, vom Lichtleiter seitlich emittierten Lichts begrenzt. Vorzugsweise wird der Winkelbereich auf kleiner als +/-20 °, besonders bevorzugt kleiner als +/- 15° begrenzt. Mit einem derartigen Lichtsensor kann das Farbempfinden des menschlichen Auges simuliert und in entsprechende Sensorsignale umgesetzt werden. Fig. 2 zeigt schematisch einen solchen Lichtsensor.

Der Lichtsensor 7, beziehungsweise 8 weist drei Sensorfelder 75, 76, 77 auf. Diese Sensorfelder 75, 76, 77 können beispielsweise Photodioden oder Phototransistoren sein. Jedem der Sensorfelder 75, 76, 77 ist ein dichroitischer Filter 71, beziehungsweise 72, beziehungsweise 73 zugeordnet, um das zum zugeordneten Sensorfeld 75, 76, 77 gelangende Licht spektral zu filtern. Die dichroitischen Filter 71, 72, 73 sind nun bevorzugt so ausgebildet, dass sie jeweils die spektrale Empfindlichkeit der verschiedenen Zäpfchensorten des menschlichen Auges nachbilden. Der Lichtsensor 7, 8 stellt damit einen Echtfarbsensor dar. Da die Transmission eines solchen dichroitischen Filters stark winkelabhängig ist, wird eine Blendeneinrichtung 78 vorgesehen, welche den Winkelbereich des auftreffenden Lichts begrenzt. Bei dem in Fig. 2 gezeigten Beispiel ist die Blendeneinrichtung 78 durch ein becherförmiges Gehäuse gegeben. Die Winkelbegrenzung entsteht dabei durch die zu den dichroitischen Filtern 71, 72, 73 beabstandete Becheröffnung. Die Randstrahlen, welche unter maximalem Winkel die Sensorfelder gerade noch treffen sind zur Verdeutlichung als gestrichelte Linien eingezeichnet. Anders als in Fig. 2 dargestellt, sind die einzelnen Farbkanäle vorzugsweise mehrfach auf dem Sensor dargestellt, um eine Winkeltrennung zu vermeiden. Mit anderen Worten sind die Sensorfelder 75, 76, 77 mehrfach vorhanden und auf der Fläche räumlich verteilt, so dass die erfassten Winkelbereiche für die jeweiligen Farben gleich oder im Wesentlichen gleich sind.

Mit einem solchen Lichtsensor 7, 8 können nun sehr realistische Lichtszenarien mit der Lichtquelle 1 nachgebildet werden. Nachteilig ist aber die durch die Blendeneinrichtung herabgesetzte Empfindlichkeit des Lichtsensors 7, 8, der überdies nur den kleinen Anteil des durch das Reflexionselement transmittierten Lichts empfängt. Der damit verbundenen geringen Lichtempfindlichkeit des Lichtsensors 7, 8 wird mit der erfindungsgemäßen adaptiven Integrationszeit mittels der Steuerungselektronik 5 begegnet.

Fig. 3 zeigt in Form zweier Diagramme einen zeitlichen Ablauf der Änderung eines Sollwerts des Farborts und des Integrationszeitintervalls. Im unteren Diagramm ist der Sollwert des Farborts als Funktion der Zeit aufgetragen. Der Farbort ist hier vereinfacht eindimensional als Betrag |x, y, I| der Farbkoordinaten x, y und I dargestellt. Dieser Betrag ist aber tatsächlich ein gutes Maß dafür, wie weit der Sollwert oder Sollbereich von den vom Lichtsensor bereitgestellten Sensorwerten entfernt ist. Gemäß einer Ausführungsform der Erfindung, ohne Beschränkung auf die speziellen Ausführungsbeispiele ist daher vorgesehen, dass die Steuerungselektronik 5 das Integrationszeitintervall anhand des Unterschieds des Betrags des vom Lichtsensor 7, 8 gemessenen Farborts und dem vorgegebenen Sollwert oder Sollbereich des Farborts einstellt.

Das obere Diagramm zeigt dazu den zeitlichen Ablauf der Einstellung des Integrationszeitintervalls I durch die Steuerungselektronik 5. Wie anhand des unteren Diagramms beispielhaft dargestellt ist, ist der Farbort zunächst konstant und ändert sich dann zu einem Zeitpunkt t1 sprunghaft. Die entsprechenden Farbwerte vor und nach dem Zeitpunkt t1 können beispielsweise über eine wie in Fig. 1 schematisch dargestellte Schnittstelle an die Steuerungselektronik 5 übermittelt werden. Da sich der Farbwert zum Zeitpunkt t1 ändert, und die Steuerungselektronik 5 den Farbort genau auf den Sollwert eingeregelt hat, vergrößert sich zum Zeitpunkt t1 der Abstand des eingestellten Farborts und damit auch der Abstand des Sensorsignals zum Sollwert. Die Steuerungselektronik 5 ist nun dazu eingerichtet, das Integrationszeitintervall abhängig von der Änderung des Sollwerts anzupassen. Da der Abstand sich durch die Änderung vergrößert, verkürzt die Steuerungselektronik 5 die Integrationszeit. Entsprechend sinkt im oberen Diagramm der Fig. 3 der Wert für die Integrationszeit I. Beispielsweise kann das Integrationszeitintervall bei einer starken Änderung des Sollwerts für den Farbort von 2 Sekunden auf 20 Millisekunden verkürzt werden. Die Regelung ist damit zunächst wesentlich ungenauer, führt aber aufgrund des hohen Abstands des Sollwerts zum Sensorsignal dennoch zu einer Einregelung der Helligkeit der einzelnen Halbleiter-Leuchtelemente in Richtung zum Sollwert hin. Entsprechend verringert sich der Abstand der Sensorwerte zum Sollwert mit fortlaufender Zeit. Die Integrationszeit wird demzufolge nun von der Steuerungselektronik 5 wieder verlängert. Bei dem in Fig. 3 gezeigten Beispiel ist die Steuerungselektronik 5 eingerichtet, das Integrationszeitintervalls stufenweise, hier zu den Zeitpunkten t2, t3 und t4 anzupassen. Es ist aber ebenso möglich, dass die Steuerungselektronik 5 eingerichtet ist, das Integrationszeitintervall kontinuierlich einzustellen.

Die Anpassung kann ebenfalls auf mehrere Weisen erfolgen. Am genauesten ist eine Anpassung des Integrationszeitintervall anhand des tatsächlich gemessenen Abstands der Sensorwerte zum Sollwert. Möglich ist aber ebenfalls, nach einer Änderung des Sollwerts die Integrationszeit zunächst zu verkürzen und dann einfach zeitabhängig die Integrationszeit wieder zu verlängern.

In beiden Fällen wird aber das Integrationszeitintervall durch die Steuerungselektronik 5 bei einer Farbort-Änderung zunächst verkürzt und dann -zeitabhängig oder direkt abhängig vom Abstand der mit dem Lichtsensor 7 gemessenen Farbwerte zum neuen Sollwert oder Sollbereich- das Integrationszeitintervall wieder verlängert. Gemäß einer Weiterbildung, ohne Beschränkung auf die in den Figuren dargestellten speziellen Ausführungsbeispiele ist die Steuerungselektronik 5 demgemäß dazu eingerichtet, unter Ansprechen auf eine Änderung des Sollwerts oder Sollbereichs das Integrationszeitintervall zu verkürzen und dann stufenweise oder kontinuierlich wieder zu verlängern.

Insbesondere, wenn die Änderung des Sollwerts für die Farbort sehr groß ist, kann gemäß noch einer Ausführungsform der Erfindung die Einstellung der Helligkeiten der Halbleiter-Leuchtelemente auch zunächst ohne Rückkopplung der Sensorwerte vorgenommen werden. Dafür ist die Steuerungselektronik 5 entsprechend eingerichtet, bei einer Änderung des Sollwerts oder Sollbereichs die Helligkeit der Halbleiter-Leuchtelemente 21, 22, 23, 24, 210, 211, 212 erst anhand abgespeicherter Werte voreinzustellen. Anschließend, etwa nach Ablauf eines vorgegebenen Zeitraums wird dann durch die Steuerungselektronik 5 der Farbort wieder wie beschrieben anhand eines Vergleichs der Sensorsignale zum Sollwert oder Sollbereich eingestellt. Das vorübergehende Ausschalten der Rückkopplung der Sensorwerte kann auch als Ändern der Integrationszeit auf einen Wert null verstanden werden.

Diese verschiedenen Ausführungsformen der Regelung können auch miteinander kombiniert werden. So kann die Regelung abhängig von den Sensorwerten durch die Steuerungselektronik 5 bei dem in Fig. 3 gezeigten Beispiel zwischen den Zeitpunkten t1 und t2 ausgeschaltet und dann ab Zeitpunkt t2 die Regelung wieder aktiviert und die Integrationszeit wie dargestellt stufenweise oder alternativ kontinuierlich erhöht werden.

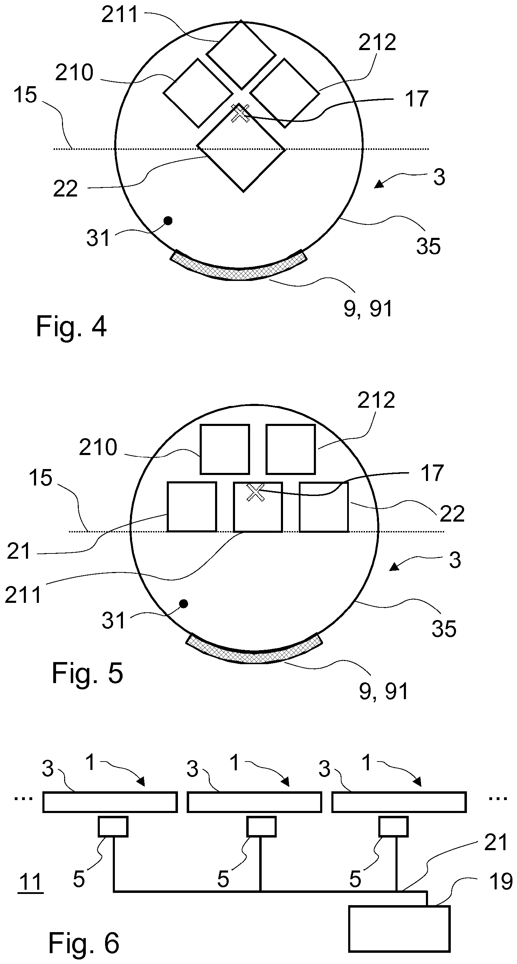

Bei dem in Fig. 1 gezeigten schematischen Beispiel sind an jeder Stirnfläche 31, 32 jeweils zwei Halbleiter-Leuchtelemente 21, 22, beziehungsweise 23, 24 vorgesehen, wobei die an einer Stirnfläche angeordneten Halbleiter-Leuchtelemente jeweils zueinander unterschiedliche Farben emittieren. Um den mit der Lichtquelle 1 einstellbaren Farbraum zu vergrößern, wird es allerdings bevorzugt, wenn an einer Stirnfläche mindestens drei, vorzugsweise mindestens vier verschiedenfarbige Halbleiter-Leuchtelemente vorgesehen werden. In den Fig. 4 und 5 werden zwei Beispiele für eine besonders vorteilhafte Anordung von Halbleiter-Leuchtelementen gezeigt. Die Anordnung ist nicht nur vorteilhaft hinsichtlich eines weiten abdeckbaren Farbraums, sondern auch in Bezug auf die Homogenität des vom Lichtleiter 3 emittierten Lichtfelds.

Bei dem in Fig. 4 gezeigten Ausführungsbeispiel ist der Lichtleiter 3 als Glas- oder Kunststoffstab mit rundem Querschnitt ausgebildet. Auf der Mantelfläche ist ein Reflexionselement 9 in Form einer Reflexionsschicht 91 aufgebracht, welche sich um einen Teil des Umfangs des Lichtleiters 3 erstreckt. Wie bereits in Bezug auf Fig. 1 erläutert, wird vorzugsweise eine diffus reflektierende und damit auch lichtstreuende Reflexionsschicht 91 verwendet, welche gleichzeitig dazu dient, das an der Mantelfläche 35 reflektierte Licht teilweise zu streuen, so dass der Grenzwinkel der Totalreflexion überschritten wird und das Licht infolge dessen aus dem Lichtleiter 3 austritt.

An der Stirnfläche 31 sind vier Halbleiter-Leuchtelemente 22, 210, 211, 212, vorzugsweise Leuchtdioden angeordnet. Halbleiter-Leuchtelement 210 emittiert rotes, Halbleiter-Leuchtelement 211 blaues und Halbleiter-Leuchtelement 212 grünes Licht. Halbleiter-Leuchtelement 22 emittiert weißes Licht. Das blaue Licht hat vorzugsweise eine Wellenlänge im Bereich: 430 - 480 nm. Für das grüne Licht wird ein Bereich von 500 - 560 nm und für das rote Licht ein Bereich 600 - 660 nm bevorzugt. Das weiße Licht hat vorzugsweise eine Farbtemperatur von 2700 K bis 7000 K.

Die Positionen der rot und grün emittierenden Halbleiter-Leuchtelemente 210 und 212 können aufgrund der Symmetrie der Anordnung in Bezug auf eine Mittellinie durch den Mittelpunkt der Stirnfläche 31 und der Reflexionsschicht 91 auch ausgetauscht werden. Alle Halbleiter-Leuchtelemente 22, 210, 211, 212 werden von der Steuerungselektronik 5 jeweils separat in ihrer Helligkeit geregelt. Demgemäß ist die Lichtquelle dazu ausgebildet, vier Farben, beziehungsweise Farbtöne separat einzustellen und durch die Lichtleitung im Lichtleiter 3 zu mischen.

Eingezeichnet ist außerdem eine gedachte Mittellinie 15 durch den Mittelpunkt der Stirnfläche 31, welche die Stirnfläche 31 in zwei gleich große Hälften teilt, wobei auf dem Umfang der einen Hälfte mittig die Reflexionsschicht 91 aufgebracht ist. Wie anhand der Anordnung der Halbleiter-Leuchtelemente 22, 210, 211, 212 ersichtlich, ist der Schwerpunkt 17 der Leuchtflächen aller Halbleiter-Leuchtelemente gegenüber der Mittellinie 15 und damit auch gegenüber dem Mittelpunkt 310 der Stirnfläche 31 in Richtung weg von der Reflexionsschicht 91 verschoben. Diese Anordnung hat sich als besonders günstig erwiesen, um eine schnelle Mischung der einzelnen Farben der Halbleiter-Leuchtelemente bereits am Ende des Lichtleiters 3 mit der jeweiligen Stirnfläche zu erzielen.

In Verbindung mit der Farbregelung gemäß der Erfindung ergibt sich aber ein besonderer Vorteil dahingehend, dass der Lichtsensor 7 Licht empfängt, welches gut durchmischt ist, so dass die aufgabengemäße hohe Genauigkeit in der Regelung des Farbortes verbessert wird. Die Anordnung ist aber auch vorteilhaft in Verbindung mit einer anderen als der erfindungsgemäßen Farbregelung. Ohne Beschränkung auf die in Anspruch 1 angegebenen Merkmale betrifft die Erfindung daher auch eine Lichtquelle 1 mit - zumindest zwei Halbleiter-Leuchtelementen 21, 22, 23, 24, 210, 211, 212, wobei die Halbleiter-Leuchtelemente 21, 22, 23, 24, 210, 211, 212 Licht unterschiedlicher Farbe emittieren, wobei die Lichtquelle 1 einen Lichtleiter 3 mit einer Stirnfläche 31 umfasst, an welche die Halbleiter-Leuchtelemente 21, 22, 23, 24, 210, 211, 212 angeordnet sind und deren emittiertes Licht zumindest teilweise eingekoppelt wird, und wobei auf dem Lichtleiter 3 eine lichtstreuende und diffus reflektierende Reflexionsschicht 91 angeordnet ist, welche sich um einen Teil des Umfangs des Lichtleiters 3 erstreckt, und wobei der Schwerpunkt 17 der Leuchtflächen aller Halbleiter-Leuchtelemente auf der Stirnfläche 31 gegenüber dem Mittelpunkt 310 der Stirnfläche 31 in Richtung weg von der Reflexionsschicht 91 verschoben ist.

Fig. 5 zeigt ein weiteres Ausführungsbeispiel. Bei diesem Ausführungsbeispiel sind fünf Halbleiter-Leuchtelemente 21, 22, 210, 211, 212 an der Stirnfläche 31 angeordnet. Wie bei dem in Fig. 4 gezeigten Beispiel emittieren die Halbleiter-Leuchtelemente 210, 211, 212 rotes, blaues, beziehungsweise grünes Licht. Zusätzlich sind zwei weißes Licht emittierende Halbleiter-Leuchtelemente 21, 22 vorgesehen. Vorzugsweise emittieren diese beiden Halbleiter-Leuchtelemente 21, 22 weißes Licht mit unterschiedlichen Farbtemperaturen. Sofern aber zwei gleichartige Halbleiter-Leuchtelemente 21, 22 vorgesehen werden, können diese auch gemeinsam durch die Steuerungselektronik 5 geregelt werden. Ansonsten wird jede unterschiedliche Farbe wie auch bei den anderen Ausführungsbeispielen separat geregelt.

Durch die Verwendung rot- grün- und blau-emittierender Halbleiter-Leuchtelemente wie in den Beispielen der Fig. 4 und 5 kann nicht nur farbiges Licht erzeugt werden, sondern es kann auch durch Beimischung farbiger Komponenten weißes Licht, insbesondere im Bereich der Farbtemperaturen von 2700 K bis 6500 K mit einem hohen Farbwiedergabeindex von größer als 80, vorzugsweise größer als 90 erzeugt werden.

Bei den Beispielen der Fig. 4 und Fig. 5 ist mindestens ein weiß emittierendes Halbleiter-Leuchtelement vorgesehen.

Es können aber alternativ auch folgende Konfigurationen, ohne Beschränkung auf die spezielle Anordnung der Leuchtelemente gemäß den Fig. 4 und 5 verwendet werden:

a) In den Lichtleiter wird rotes, grünes und blaues Licht eingekoppelt, vorzugsweise mit den oben beschriebenen Wellenlängen. Weißes Licht kann dann durch Mischung der drei Farben erzeugt werden.
b) Es wird eine RGBA-Konfiguration von Halbleiter-Leuchtelementen vorgesehen. Dabei ist zusätzlich zu den rot, grün und blau emittierenden Halbleiter-Leuchtelementen noch zusätzlich mindestens ein gelborange emittierendes Halbleiter-Leuchtelement (Farbton Amber: 575 nm - 600 nm) vorhanden.

Bei den bisher gezeigten Ausführungsbeispielen ist nur eine einzelne Lichtquelle 1, beziehungsweise ein einzelner Lichtleiter 3 beschrieben worden. Die Erfindung eignet sich aber besonders auch dazu, mehrere solcher Lichtquellen 1 hintereinander anzuordnen, um eine linienförmige, homogen leuchtende Beleuchtungseinrichtung zu schaffen.

Dazu ist gemäß einer Ausführungsform der Erfindung, ohne Beschränkung auf die spezielle Ausgestaltung der in den vorhergehenden Figuren dargestellten Ausführungsbeispiele eine Beleuchtungseinrichtung 11 vorgesehen, wie sie in Fig. 6 gezeigt ist. Die Beleuchtungseinrichtung 11 umfasst mehrere erfindungsgemäße Lichtquellen 1, sowie einer Steuerungseinrichtung 19 und eine Datenleitung 21. Die Steuerungseinrichtung 19 ist zur Ausgabe von Daten, die Farbwerte repräsentieren, ausgebildet. Über die Datenleitung 21 sind die Steuerungselektroniken 5 der einzelnen Lichtquellen 1 mit der Steuerungseinrichtung 19 verbunden. Die Steuerungselektroniken 5 sind ihrerseits dazu eingerichtet, die über die Datenleitung 21, insbesondere über eine wie bei dem in Fig. 1 gezeigten Ausführungsbeispiel vorhandene Schnittstelle 51 empfangenen Farbwerte als Sollwerte oder Sollbereiche abzuspeichern und die Helligkeit der Halbleiter-Lichtquellen in Abhängigkeit vom Unterschied der Sensorsignale der Lichtsensoren zu einem empfangenen Farbwert zu ändern. Die Lichtsensoren 7 und die Halbleiter-Leuchtelemente sind der Einfachheit halber in Fig. 6 nicht dargestellt. Jede der Lichtquellen 1 ist aber erfindungsgemäß aufgebaut und weist zusätzlich zum dargestellten Lichtleiter 3 und der Steuerungselektronik 5 mindestens zwei Halbleiter-Leuchtelemente und mindestens einen Lichtsensor auf. Die Steuerungseinrichtung 19 gibt die Farbwerte bevorzugt taktweise, beispielsweise alle 40 Millisekunden über die Datenleitung 21 aus. Auf diese Weise kann die Beleuchtung zentral mittels der Steuerungseinrichtung 19 in einfacher Weise schnell geregelt werden. Um eine linienförmige Beleuchtung zu erreichen, sind die Lichtleiter 3 der Lichtquellen bei der in Fig. 6 gezeigten beispielhaften Ausführungsform hintereinander angeordnet, so dass die Stirnflächen aufeinanderfolgender Lichtleiter 3 einander zugewandt sind.

Eine solche Anordnung von Lichtleitern ist auch aus der WO 2012/130497 A1 bekannt. Allerdings entsteht dabei zwischen den einzelnen Lichtleitern 3 ein Zwischenraum.

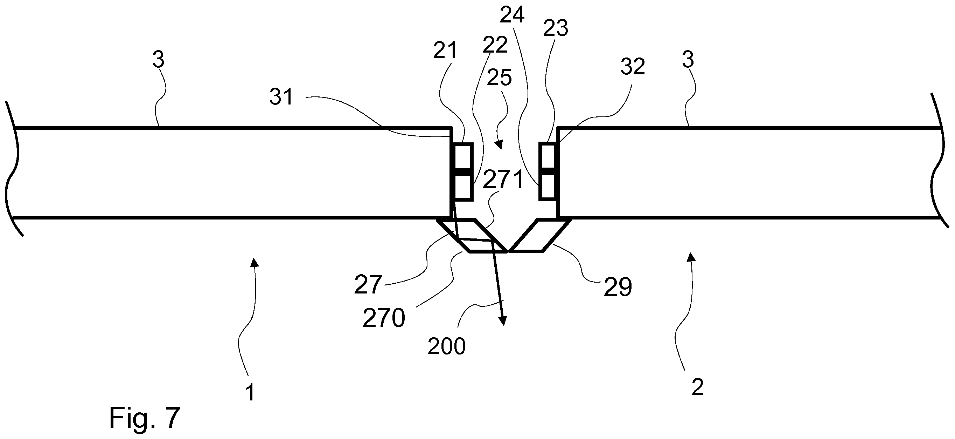

Die Homogenität des abgegebenen Lichtfelds kann bei mehreren hintereinander angeordneten erfindungsgemäßen Lichtquellen nun weiterhin dadurch verbessert werden, seitlich an den Halbleiter-Leuchtelementen austretendes Licht umgelenkt und in den Bereich zwischen den beiden Stirnflächen benachbarter Lichtleiter eingestrahlt wird. Fig. 7 zeigt den Bereich zwischen zwei Lichtleitern 3. Die Lichtleiter 3 zweier erfindungsgemäßer Lichtquellen 1, 2 sind in Längsrichtung hintereinander angeordnet, so dass die Stirnflächen 31, 32 der beiden Lichtleiter 3 in Gegenüberstellung einander zugewandt sind. Um eine möglichst homogene Beleuchtung zu erzielen, ist nun allgemein, unabhängig von einer Steuerungselektronik, dem Abgleich von Farbwerten mit Sensorsignalen und der Anpassung eines Integrationszeitintervalls eine Beleuchtungseinrichtung mit folgenden, in Fig. 7 beispielhaft dargestellten Merkmalen vorgesehen: Die Beleuchtungseinrichtung umfasst mindestens zwei Lichtleiter 3 und zumindest ein Halbleiter-Leuchtelement 21, 22, beziehungsweise 23, 24 für jeden der Lichtleiter 3. Die Lichtleiter 3 sind mit ihren Stirnflächen 31, 32 zueinander beabstandet und die Halbleiter-Leuchtelemente 21, 22, 23, 24 im Zwischenbereich 25 zwischen den Stirnflächen 31, 32 angeordnet, so dass das Licht der Halbleiter-Leuchtelemente über die Stirnflächen 31, 32 in die Lichtleiter 3 eingekoppelt wird, und wobei die Lichtleiter 3 das eingekoppelte Licht in Längsrichtung leiten und seitlich entlang der Länge der Lichtleiter 3 wieder emittieren. Es ist zumindest ein Prisma 27, 29 am oder im Zwischenbereich 25 vorgesehen, welches so angeordnet und ausgebildet ist, dass dieses in einer ersten Reflexion von den Halbleiter-Leuchtelementen seitlich emittiertes Licht in Richtung von der Stirnfläche 31, 32, weg umlenkt und in einer zweiten Reflexion dieses umgelenkte Licht quer zur Längsrichtung des Lichtleiters 3 umlenkt und abgibt. Bei dem in Fig. 7 gezeigten Ausführungsbeispiel sind zwei Prismen 27, 29 vorgesehen. Es kann aber auch ein einzelnes Prisma mit entsprechenden Brechflächen verwendet werden. Um eine wie oben beschriebene zweifache Lichtumlenkung und nachfolgende seitliche Emission zu erzielen, ist es günstig, wenn das oder die Prismen 27, 29 für jeden Lichtleitern 3 zwei schräg zur Längsrichtung des Lichtleiters 3 verlaufende Reflexionsflächen aufweisen. Diese Reflexionsflächen sind am Prisma 27 mit den Bezugszeichen 270, 271 gekennzeichnet. Insbesondere verlaufen beide Reflexionsflächen 270, 271 schräg von der Stirnfläche 31 weg nach außen. Zur Verdeutlichung ist der Strahlengang eines seitlich von den Halbleiter-Leuchtelementen 21, 22 emittierten Lichtstrahls 200 eingezeichnet. Der seitlich emittierte Lichtstrahl 200 tritt zunächst in das Prisma 27 ein und wird von der ersten, schräg zur Längsrichtung des Lichtleiters 3 der Lichtquelle 1 verlaufenden Reflexionsfläche 270 in Richtung weg von der Stirnfläche 31 umgelenkt. Die in diesem Beispiel parallel zur Reflexionsfläche 270 verlaufende zweite Reflexionsfläche 271 lenkt den Lichtstrahl wieder in seine ursprüngliche Richtung seitlich vom Lichtleiter 3 weg nach außen, jedoch aufgrund der zweifachen Reflexion nun versetzt von der Stirnfläche 31 weg und in den Zwischenbereich 25 hinein. Diese Ausführungsform ist auch in Verbindung mit der erfindungsgemäßen Anpassung des Integrationszeitintervalls vorteilhaft, da auch das seitlich von den Halbleiter-Leuchtelementen emittierte Licht zur Erzielung einer hohen Effizienz und homogenen Beleuchtung genutzt wird.

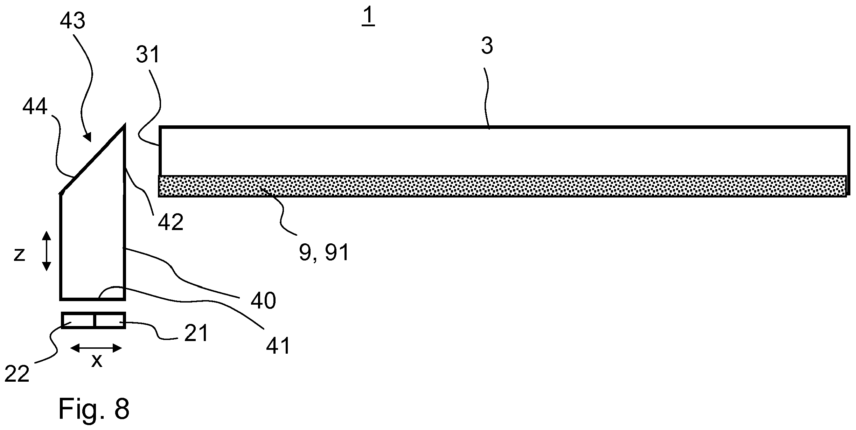

Bei den bisher gezeigten Beispielen wird das Licht der Halbleiter-Leuchtelemente direkt in die Stirnfläche des Lichtleiters 3 eingekoppelt. Dies ist vorteilhaft für eine hohe Effizienz. Die Anordnung der Halbleiter-Lichtquellen gemäß Fig. 4 und Fig. 5 verbessert dabei die Farbhomogenität des abgestrahlten Lichts. Im Bereich des Lichtleiters nahe an der Stirnfläche 31 können dennoch Farbabweichungen auftreten, da die Wege der Lichtstrahlen bis zur Mantelfläche des Lichtleiters unterschiedlich lang sind. Eine besonders hohe Homogenität des seitlich abgestrahlten Lichts kann nun mit einer schematisch in Fig. 8 dargestellten Ausführungsform erzielt werden. Die Lichtquelle 1 umfasst einen Lichtmischer 40 mit einer Lichteintrittsfläche 41 und einer Lichtaustrittsfläche 42. Das Licht der Halbleiter-Leuchtelemente 21, 22 durch die Lichteintrittsseite 41 in den Lichtmischer 40 eingekoppelt. Das Licht wird im Lichtmischer 40 durch Reflexion an dessen Wandung geführt. Mithin stellt der Lichtmischer 40 selbst einen Lichtleiter dar. Wie anhand von Fig. 8 ersichtlich, verläuft die Längs-, beziehungsweise Lichtleitungsrichtung des Lichtmischers 40 quer zur Längsrichtung des Lichtleiters 3. Um das quer zur Längsrichtung des Lichtleiters 3 geleitete Licht nun in die Stirnseite 31 des Lichtleiters 3 einkoppeln zu können, ist eine Lichtumlenkeinrichtung 43 mit einer Reflexionsfläche 44 angeordnet, welche das Licht zur Stirnseite 31 hin umlenkt. Die Lichtumlenkeinrichtung kann beispielsweise ein Spiegel oder ein Prisma oder ein Prisma mit verspiegelter Reflexionsfläche 44 sein. Vorzugsweise erstreckt sich der Lichtmischer 40 entlang einer radialen Richtung des Lichtleiters 3, welche in Aufsicht auf die Stirnfläche 31 gesehen die Reflexionsschicht 91 kreuzt. Damit erstreckt sich der Lichtmischer entgegen der Lichtabgaberichtung des Lichtleiters 3. Auf diese Weise kann der Lichtmischer in einem Wandelement verbaut werden, ohne in den zu beleuchtenden Bereich hineinzuragen. Durch die hohe Homogenität aufgrund der im Lichtmischer 40 erzielten räumlichen Durchmischung des Lichts der verschiedenfarbigen Halbleiter-Leuchtelemente eignet sich diese Ausführungsform sehr gut in Verbindung mit der erfindungsgemäßen Regelung der Integrationszeit, mit welcher schnell ein genauer Farbort einstellbar ist. Unter anderem stellt der Lichtmischer 40 sicher, dass am Messort des Lichtsensors 7, 8 das Licht möglichst genau dem mittleren Farbwert des abgestrahlten Lichts entspricht. Diese Ausgestaltung der Lichtquelle 1 kann aber auch mit einer andersartigen Stromversorgung oder Steuerungselektronik kombiniert werden, ist also unabhängig von der Steuerung einer Integrationszeit. Demgemäß betrifft die Erfindung auch eine Lichtquelle 1 mit zumindest zwei Halbleiter-Leuchtelementen 21, 22, wobei die Halbleiter-Leuchtelemente 21, 22 Licht unterschiedlicher Farbe emittieren, wobei die Lichtquelle einen Lichtleiter 3 umfasst, und wobei der Lichtleiter 3 so ausgebildet ist, dass das von den Halbleiter-Leuchtelementen 21, 22 erzeugte Licht seitlich aus dem Lichtleiter 3 austritt, wobei die Lichtquelle einen lichtleitenden Lichtmischer 40 umfasst, in welchen das von den Halbleiter-Leuchtelementen 21, 22 emittierte Licht zumindest teilweise eingekoppelt wird, wobei die Längsrichtung des Lichtmischers 40, entlang welcher dieser das Licht der Halbleiter-Leuchtelemente 21, 22 leitet, quer zur Längsrichtung des Lichtleiters 3 verläuft, und wobei eine Lichtumlenkeinrichtung 43 vorgesehen ist, welche das im Lichtmischer geleitete Licht in Richtung auf eine Stirnseite 31 des Lichtleiters umlenkt, so dass das Licht nach der Umlenkung in die Stirnfläche 31 des Lichtleiters 3 eingekoppelt wird.

Um ähnlich wie bei der in Fig. 7 dargestellten Ausführungsform bei einer Aneinanderreihung mehrerer Lichtquellen 1 im Zwischenbereich zwischen den Lichtquellen ebenfalls Licht auszukoppeln, kann die Reflexionsfläche 44 auch teilreflektierend ausgebildet sein, so dass ein kleiner Teil des im Lichtmischer 40 gemischten Lichts durch die Reflexionsfläche 44 hindurchtritt. Beispielsweise kann ein Prisma als Lichtumlenkeinrichtung 40 vorgesehen sein, dessen Reflexionsfläche 44 metallisiert ist, wobei die Metallisierung bereichsweise unterbrochen ist, um Licht hindurchtreten zu lassen. Beispielsweise kann dazu beim Metallisieren der Reflexionsfläche ein kleiner Teil der Fläche maskiert werden.

Generell sollte für eine hohe Effizienz ein solcher Lichtmischer, wie er in Fig. 8 dargestellt ist, das Licht so nach der Reflexion auskoppeln, dass ein möglichst großer Anteil des Lichts auch wieder in das nachfolgende optische Element, hier im Speziellen in den Lichtleiter 3 eingekoppelt wird. Es zeigt sich überraschend, dass es dazu günstig ist, die Aspektverhältnisse, also die Verhältnisse der Querabmessungen von Lichteinkoppelfläche und Lichtauskoppelfläche unterschiedlich zu wählen. Insbesondere sind für eine optimale Effizienz diese Verhältnisse abhängig von der Geometrie der Lichteintrittsfläche des nachfolgenden optischen Elements, wie etwa der Form der Lichteintrittsfläche des Lichtleiters 3.

Gemäß einer Weiterbildung der Erfindung ist dazu eine optische Anordnung mit einem ersten optischen Element in Gestalt eines mit einer Anschnittfläche schräg angeschnittenen zweiten Lichtleiters (zur Unterscheidung vom seitlich emittierenden Lichtleiter 3), welcher den lichtleitenden Lichtmischer 40 bildet und einem zweiten optischen Element vorgesehen, wobei das zweite optische Element den Lichtleiter 3 bildet oder ein dem Lichtleiter 3 und dem Lichtmischer zwischengeschaltetes optisches Element ist, wobei das erste optische Element, beziehungsweise der zweite Lichtleiter Licht durch Totalreflexion an dessen Wandung leitet, und eine Lichteintrittsfläche aufweist, welche durch die nicht angeschnittene Stirnfläche des zweiten Lichtleiters gebildet wird, und eine Lichtaustrittsfläche aufweist, wobei die Lichtaustrittsfläche durch einen Bereich der Wandung an dem Ende des Lichtmischers 40, beziehungsweise dem zweiten Lichtleiter gebildet wird, an welchem die Anschnittfläche angeordnet ist. Das zweite optische Element weist hierbei eine Lichteintrittsapertur, welche an der Lichtaustrittsfläche des ersten optischen Elements oder in Gegenüberstellung der Lichtaustrittsfläche des ersten optischen Elements, beziehungsweise des Lichtmischers 40 angeordnet ist, wobei die Lichteintrittsfläche des ersten optischen Elements, beziehungsweise des zweiten Lichtleiters eine Breite x gemessen in Richtung entlang des Schnitts der Lichteintrittsfläche mit der Ebene der Lichtumlenkung an der Anschnittfläche und die Lichteintrittsapertur des zweiten optischen Elements eine Höhe z gemessen in Richtung entlang des Schnitts der Lichtaustrittsfläche des zweiten Lichtleiters mit der Ebene der Lichtumlenkung an der Anschnittfläche aufweisen.

Die Breite x und die Höhe z stehen dabei in folgender Beziehung zueinander:

$$(1) \quad x/z \le 1{,}5 \cdot \left[\tan\left(90° - \alpha/2\right) - \tan\left(90° - \left(2 \cdot \left[\alpha/2 + 90°\right] - \left[180° - \arcsin\left(1/n\right)\right]\right)\right)\right]^{-1}$$

wobei $\alpha$ den Umlenkwinkel des Lichts an der Anschnittfläche und n den Brechungsindex des Materials des zweiten Lichtleiters bezeichnen. Das Koordinatensystem ist dabei ohne Einschränkung der Allgemeinheit so gewählt, dass die Ablenkung des Lichts nur in der x-z-Ebene stattfindet.

Die Anschnittfläche bildet dabei die Lichtumlenkeinrichtung 43 des Lichtmischers und ist die in Fig. 8 gezeigte Reflexionsfläche 44. Das Licht der Halbleiter-Leuchtelemente wird an der Anschnittfläche durch Totalreflexion und/oder Reflexion an einem auf der Anschnittfläche angeordneten reflektierenden Material in Richtung auf den Lichtleiter 3 umgelenkt.

Der Lichtmischer ist bevorzugt in Gestalt eines Prismas ausgebildet, wobei dessen Lichteintrittsfläche 41 durch die nicht angeschnittene Grundfläche des Prismas gebildet wird. Ein Prisma im Sinne der Erfindung ist ein Körper, welcher durch Parallelverschiebung einer Grundfläche, also im Falle der Erfindung durch Parallelverschiebung der Lichteintrittsfläche entsteht. Dabei muss die Grundfläche nicht unbedingt eckig sein. Vielmehr kann die Grundfläche, beziehungsweise die Querschnittfläche des Prismas auch runde Umrandungsabschnitte aufweisen.

Die x-Richtung und die z-Richtung sind in Fig. 8 zur Verdeutlichung eingezeichnet.

Für die Effizienz sind große Werte der Abmessung z günstig, allerdings ist sinkt der Zuwachs an in das zweite optische Element einkoppelbarer Intensität bei großen Werten für z, während damit entsprechend das zweite optische Element immer voluminöser wird. Es ist daher gemäß einer Weiterbildung der Erfindung von Vorteil, wenn die Höhe z des zweiten optischen Elements gegenüber der Breite der Lichteintrittsfläche des ersten optischen Elements begrenzt wird. Im Speziellen ist in Weiterbildung der Erfindung daher vorgesehen, dass die Abmessungen x und z zusätzlich in folgender Beziehung zueinander stehen:

$$(2) \quad x/z \ge 0{,}85 \cdot \left[\tan\left(90° - \alpha/2\right) - \tan\left(90° - \left(2 \cdot \left[\alpha/2 + 90°\right] - \left[180° - \arcsin\left(1/n\right)\right]\right)\right)\right]^{-1} .$$

Besonders platzsparend ist eine Umlenkung des Lichts an der Anschnittfläche um 90°. Auch bei der in Fig. 8 gezeigten Anordnung ist dies der Fall. Gemäß dieser bevorzugten Weiterbildung mit 90°-Umlenkung ergibt sich, dass die Höhe z der Lichteintrittsapertur des zweiten optischen Elements, vorzugsweise der Stirnfläche 31 des Lichtleiters 3 und die Breite x der Lichteintrittsfläche des zweiten Lichtleiters in folgender Beziehung zueinander stehen:

$$(3) \quad x/z \le 1{,}5 \cdot \left[1 + \tan\left(\arcsin\left(1/n\right)\right)\right]^{-1} ,$$

wobei n den Brechungsindex des Materials des zweiten Lichtleiters bezeichnet.

Vorzugsweise gilt dabei für das Verhältnis x/z entsprechend zur allgemeineren Beziehung (2) zusätzlich:

$$(4) \quad x/z \geq 0,85 \cdot \left[1 + \tan\left(\arcsin(1/n)\right)\right]^{-1}$$

Die Form der Lichteintrittsapertur des zweiten optischen Elements der optischen Anordnung weist vorzugsweise ein Aspektverhältnis von 0,8:1 bis 1,2:1, besonders bevorzugt von 0,9:1 bis 1,1:1, insbesondere bevorzugt von 1:1 für zwei zueinander senkrechte Richtungen auf. Die Erfindung ermöglicht gerade bei solchen Aspektverhältnissen um 1:1 und einer Lichtumlenkung eine hohe Einkoppeleffizienz. Ein Aspektverhältnis y/z von 1:1 ist beispielsweise gegeben, wenn der Lichtleiter 3 das zweite optische Element bildet und eine runde oder quadratische Querschnittfläche aufweist.

Um die Effizienz der Einkopplung in den Lichtleiter 3 zu verbessern, haben sich alternativ oder zusätzlich zur vorstehend beschriebenen Ausgestaltung der Erfindung bestimmte Querschnittformen des Lichtmischers 40 in Gestalt eines prismenförmigen Lichtleiters erwiesen.

Gemäß einem weiteren Aspekt der Erfindung ist dabei ein Lichtmischer in Gestalt eines mit einer eine Reflexionsfläche 44 bildenden Anschnittfläche schräg angeschnittenen prismenförmigen zweiten Lichtleiters vorgesehen, wobei der Lichtmischer

- Licht durch Totalreflexion an dessen Wandung 22 leitet, und
- eine Lichteintrittsfläche 41 aufweist, welche durch die nicht angeschnittene Stirnfläche des Lichtmischers gebildet wird, und
- eine Lichtaustrittsfläche 42 aufweist, wobei die Lichtaustrittsfläche 42 durch einen Bereich der Wandung an dem Ende des Lichtleiters gebildet wird, an welchem die Anschnittfläche angeordnet ist, wobei die Querschnittfläche des Lichtmischers 40 eine Form aufweist, deren Abmessung sich in Richtung der vom Lichtleiter 3 abgewandten Seite zum Lichtleiter 3 hin monoton erweitert und dabei in zumindest einem Abschnitt entlang dieser Richtung streng monoton erweitert.

Derartige Querschnittformen erweisen sich ebenfalls als besonders günstig für die Effizienz des optischen Systems. Mit solchen Querschnittformen wird erreicht, dass an der Lichtaustrittsfläche möglichst wenig Licht so austritt, dass es nicht mehr in die Eintrittsapertur des nachfolgenden optischen Elements gelangt.

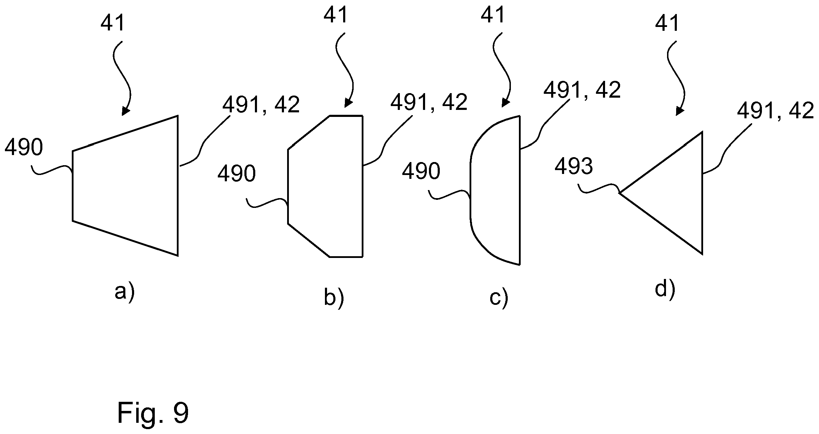

In Fig. 9 sind verschiedene Beispiele solcher Querschnittflächen des Lichtmischers dargestellt. Die Querschnittfläche entspricht in ihrer Form der Lichteintrittsfläche 41.

In Fig. 6 werden vier verschiedene, Grundflächen, beziehungsweise Querschnittsflächen 192 des Lichtleiters 19 gemäß weiterer Ausführungsformen der Erfindung gezeigt. Diese Ausführungsformen basieren darauf, dass die Querschnittfläche des Lichtleiters 19 eine Form aufweist, deren Abmessung sich in Richtung der vom zweiten optischen Element 3 abgewandten Seite zum zweiten optischen Element 3 hin monoton erweitert und dabei in zumindest einem Abschnitt entlang dieser Richtung streng monoton erweitert.

Teil a) von Fig. 6 zeigt eine Querschnittfläche, deren Breite über die gesamte Ausdehnung des Lichtleiters streng monoton von einer Seitenfläche 490 zur gegenüberliegenden Seitenfläche 491 hin, die auch die Lichtaustrittsfläche 42 beinhaltet, ansteigt.

Teil b) von Fig. 6 zeigt eine Querschnittfläche, deren Breite, in der Zeichnung von links nach rechts, zunächst streng monoton steigt und dann konstant ist.

Bei den Ausführungsbeispielen der Teile a) und b) von Fig. 6 ist der Lichtleiter aus ebenen Wandabschnitten aufgebaut. Es ist ebenso aber auch möglich, gerundete Wandungen vorzusehen. Ein Beispiel dazu zeigt Teil c) der Fig. 6. Bei der Querschnittfläche des Lichtleiters gemäß diesem Ausführungsbeispiel sind die Wandabschnitte, in denen die Querschnittabmessung streng monoton ansteigt, gerundet.

Teil d) von Fig. 6 zeigt eine dreieckige Grundfläche. Hier ist demgemäß keine der Lichtaustrittsfläche 25 gegenüberliegende Fläche vorhanden, sondern der Querschnitt erweitert sich ausgehend von einer Kante 493 zur Seitenfläche 191 hin.

In der Seitenfläche 491 liegt, wie bereits anhand von Fig. 1 verdeutlicht, auch die Lichtaustrittsfläche 25. Allen Ausführungsbeispielen der Fig. 6 ist gemeinsam, dass aufgrund der monotonen und zumindest abschnittsweise streng monotonen Erweiterung der Abmessung des Querschnitts zur Lichtaustrittsfläche 25 hin (also bei der Orientierung der dargestellten Ausführungsbeispiele von links nach rechts) an der Lichtaustrittsfläche 42, beziehungsweise an der zugehörigen Seitenfläche 491 der Querschnitt und damit die Lichteintrittsfläche 41 ihre maximale Abmessung aufweist.

Es ist dem Fachmann ersichtlich, dass die Erfindung nicht auf die Ausführungsbeispiele beschränkt ist, sondern in vielfältiger Weise im Rahmen des Gegenstands der Ansprüche variiert werden kann. So wurden in den Ausführungsbeispielen der Fig. 4 und 5 Lichtleiter mit rundem Querschnitt beschrieben. Es sind aber auch polygonale, beispielsweise quadratische oder rechteckige Querschnittsformen möglich. Auch kann der Lichtleiter 3 plattenförmig ausgestaltet sein.

Bei den in den Figuren dargestellten Ausführungsformen ist weiterhin für jede Lichtquelle 1 ein einzelner Lichtleiter vorgesehen. Es können aber auch mehrere Lichtleiter hintereinandergeschaltet werden. Die Lichtleiter können dabei mit einer geeigneten Kopplung zusammengesteckt werden. Auch können in Weiterbildung des anhand von Fig. 1 erläuterten Beispiels zwei Regelkreise in der Steuerungselektronik 5 vorgesehen sein, mit denen gesteuert anhand der Sensorwerte der beiden Lichtsensoren 7, 8 unterschiedliche Farborte mit den jeweiligen Halbleiter-Leuchtelementen an beiden Stirnflächen 31, 32 eingestellt werden. Damit kann dann mit einer wie in Fig. 6 schematisch gezeigten Beleuchtungseinrichtung 11 auch beispielsweise ein Farbgradient entlang der hintereinander angeordneten, seitlich emittierenden Lichtleiter 3 der einzelnen Lichtquellen 1 eingestellt werden. Um die einzelnen Farbwerte zu übermitteln, können dann von der Steuerungseinrichtung 19 die verschiedenen Sollwerte oder Sollbereiche mittels einer geeigneten Adressierung, beispielsweise Telegramm-basiert, an die Steuerungselektroniken 5 der Lichtquellen 1 übergeben werden.

Bezugszeichenliste:

| | |
|---|---|
| 1, 2 | Lichtquelle |
| 21, 22, 23, 24, 210, 211, 212 | Halbleiter-Leuchtelemente |
| 3 | Lichtleiter |
| 5 | Steuerungselektronik |
| 7, 8 | Lichtsensor |
| 9 | Reflexionselement |
| 11 | Beleuchtungseinrichtung |
| 13 | elektrische Verbindung |
| 15 | Mittellinie |
| 17 | Schwerpunkt der Leuchtflächen der Halbleiter-Leuchtelemente |
| 19 | Steuerungseinrichtung |
| 21 | Datenleitung |
| 25 | Zwischenbereich zwischen den Stirnflächen zweier Lichtleiter |
| 27, 29 | Prisma |
| 31, 32 | Stirnfläche von 3 |
| 34 | Abstand des Lichtsensors 7, 8 zur nächsten Stirnfläche |
| 35 | Mantelfläche von 3 |
| 40 | Lichtmischer |
| 41 | Lichteintrittsfläche von 40 |
| 42 | Lichtaustrittsfläche von 40 |
| 43 | Lichtumlenkeinrichtung |
| 44 | Reflexionsfläche von 40 |
| 50 | Mikrocontroller |
| 51 | Schnittstelle |
| 71, 72, 73 | dichroitische Filter |
| 75, 76, 77 | Sensorfelder |
| 78 | Blendeneinrichtung |
| 91 | Reflexionsschicht |
| 200 | Lichtstrahl |
| 490, 491 | Seitenfläche von 40 |
| 493 | Kante von 40 |

**Patentansprüche**

1. Lichtquelle (1) mit

- zumindest zwei Halbleiter-Leuchtelementen (21, 22, 23, 24, 210, 211, 212), wobei die Halbleiter-Leuchtelemente (21, 22, 23, 24, 210, 211, 212) Licht unterschiedlicher Farbe emittieren, wobei die Lichtquelle
- einen Lichtleiter (3) umfasst, in welchen das von den Halbleiter-Leuchtelementen (21, 22, 23, 24, 210, 211, 212) emittierte Licht zumindest teilweise eingekoppelt wird, und wobei der Lichtleiter (3) so ausgebildet ist, dass das von den Halbleiter-Leuchtelementen (21, 22, 23, 24, 210, 211, 212) eingekoppelte Licht seitlich aus dem Lichtleiter (3) austritt, und wobei die Lichtquelle (1) weiterhin

- eine Steuerungselektronik (5), mit welcher die Helligkeit der Halbleiter-Leuchtelemente (21, 22, 23, 24, 210, 211, 212) einstellbar ist, sowie

- einen Lichtsensor (7) umfasst, der so angeordnet ist, dass dieser das von den Halbleiter-Lichtquellen (21, 22, 23, 24, 210, 211, 212) eingekoppelte und seitlich aus dem Lichtleiter (3) austretende Licht empfängt, wobei ein Abstand in Längsrichtung des Lichtleiters zwischen dem Lichtsensor und der Stirnfläche des Lichtleiters eingehalten wird, und wobei die Steuerungselektronik (5) mit Lichtsensor (7) eingerichtet ist,

- die Sensorsignale über ein Integrationszeitintervall zu akkumulieren, sowie

- die akkumulierten Signale des Lichtsensors (7) mit einem Sollwert oder Sollbereich zu vergleichen und die Helligkeit der Halbleiter-Leuchtelemente (21, 22, 23, 24, 210, 211, 212) in Abhängigkeit vom Unterschied der Sensorsignale zum Sollwert oder Sollbereich zu ändern, sowie das Integrationszeitintervall abhängig vom Abstand des Sensorsignals zum Sollwert oder Sollbereich oder abhängig von einer Änderung des Sollwerts zu ändern.

2. Lichtquelle gemäß dem vorstehenden Anspruch, **dadurch gekennzeichnet, dass** die Steuerungselektronik (5) dazu eingerichtet ist, das Integrationszeitintervall abhängig vom Abstand zum Sollwert oder Sollbereich zu ändern indem für einen größeren Abstand ein kürzeres Integrationszeitintervall eingestellt wird, als bei einem kürzeren Abstand.

3. Lichtquelle (1) gemäß einem der vorstehenden Ansprüche, **dadurch gekennzeichnet, dass** die Steuerungselektronik (5) dazu eingerichtet ist, unter Ansprechen auf eine Änderung des Sollwerts oder Sollbereichs das Integrationszeitintervall zu verkürzen und dann stufenweise oder kontinuierlich wieder zu verlängern.

4. Lichtquelle (1) gemäß einem der vorstehenden Ansprüche, **dadurch gekennzeichnet, dass** die Steuerungselektronik (5) dazu eingerichtet ist, bei einer Änderung des Sollwerts oder Sollbereichs die Helligkeit der Halbleiter-Leuchtelemente (21, 22, 23, 24, 210, 211, 212) anhand abgespeicherter Werte voreinzustellen und anschließend den Farbort genauer anhand eines Vergleichs der Sensorsignale zum Sollwert oder Sollbereich einzustellen.

5. Lichtquelle (1) gemäß einem der vorstehenden Ansprüche, **gekennzeichnet durch** ein Reflexionselement (9), welches so angeordnet ist, dass dieses einen Teil des seitlich aus dem Lichtleiter emittierten Lichts reflektiert, wobei der Lichtsensor (7) so angeordnet ist, dass dieser das aus dem Lichtleiter seitlich austretende und durch das Reflexionselement (9) hindurchtretende Licht empfängt.

6. Lichtquelle (1) gemäß dem vorstehenden Anspruch, **dadurch gekennzeichnet, dass** das Reflexionselement (9) durch eine Reflexionsschicht (91) gebildet wird, welche sich um einen Teil des Umfangs des Lichtleiters erstreckt.

7. Lichtquelle (1) gemäß einem der drei vorstehenden Ansprüche, **dadurch gekennzeichnet, dass** das Reflexionselement (9) zumindest teilweise diffus reflektierend ausgebildet ist und im Lichtleiter (3) geleitetes Licht streut, so dass das gestreute und dabei diffus reflektierte Licht aus dem Lichtleiter (3) seitlich austritt.

8. Lichtquelle (1) gemäß einem der vorstehenden Ansprüche, **dadurch gekennzeichnet, dass** der Lichtsensor (7) so angeordnet ist, dass dieser Licht empfängt, welches in einem Abstand zu einer Stirnfläche (31) des Lichtleiters entlang der Lichtleitungsrichtung des Lichtleiters seitlich emittiert wird, wobei der Abstand mindestens dem zweifachen, vorzugsweise mindestens dem dreifachen der Querabmessung des Lichtleiters (3) entspricht.

9. Lichtquelle (1) gemäß einem der vorstehenden Ansprüche, **dadurch gekennzeichnet, dass** die Halbleiter-Leuchtelemente (21, 22, 23, 24, 210, 211, 212) eine vierfarbige LED-Anordnung umfassen, mit zumindest einer rot emittierenden, zumindest einer grün oder gelb emittierenden, zumindest einer blau emittierenden und zumindest einer weißes Licht emittierenden Leuchtdiode.

10. Lichtquelle (1) gemäß einem der vorstehenden Ansprüche, **dadurch gekennzeichnet, dass** der Lichtsensor (7) mehrere Sensorfelder mit unterschiedlichen dichroitischen Filtern (71, 72) und einer Blendeneinrichtung aufweist, welche den Winkelbereich des auf die Sensorfelder fallenden, vom Lichtleiter seitlich emittierten Lichts auf kleiner als 90 ° begrenzt.

11. Lichtquelle (1) gemäß einem der vorstehenden Ansprüche, wobei der Lichtleiter zwei Stirnflächen (31, 32) an gegenüberliegenden Enden aufweist, und wobei für beide Stirnflächen (31, 32) jeweils zumindest zwei Halbleiter-Leuchtelemente (21, 22, 23, 24, 210, 211, 212) so an den Stirnflächen (31, 32) angeordnet sind, dass deren emittiertes Licht in den Lichtleiter (1) durch die jeweilige Stirnfläche (31, 32) eingekoppelt wird.

**12.** Lichtquelle (1) gemäß dem vorstehenden Anspruch, **gekennzeichnet durch** einen ersten Lichtsensor (7) und einen zweiten Lichtsensor (8), wobei die Lichtsensoren (7, 8) jeweils einer der Stirnflächen (31, 32) zugeordnet sind, derart, dass jeder der Lichtsensoren (7, 8) jeweils einen größeren Anteil des in die diesem Lichtsensor (7, 8) zugeordnete Stirnfläche eingekoppelten Lichts empfängt, und wobei die Steuerungselektronik (5) eingerichtet ist, die Halbleiter-Leuchtelemente an jeder der Stirnflächen (31, 32) getrennt voneinander und abhängig von den Sensorsignalen des der jeweiligen Stirnfläche (31, 32) zugeordneten Lichtsensors (7, 8) zu regeln.

**13.** Lichtquelle (1) gemäß einem der vorstehenden Ansprüche, wobei die Lichtquelle (1) einen lichtleitenden Lichtmischer (40) umfasst, in welchen von den Halbleiter-Leuchtelementen (21, 22) emittiertes Licht zumindest teilweise eingekoppelt wird, wobei die Längsrichtung des Lichtmischers (40), entlang welcher dieser das Licht der Halbleiter-Leuchtelemente (21, 22) leitet, quer zur Längsrichtung des Lichtleiters (3) verläuft, und wobei eine Lichtumlenkeinrichtung (43) vorgesehen ist, welche das im Lichtmischer (40) geleitete Licht in Richtung auf eine Stirnseite (31) des Lichtleiters (3) umlenkt, um Licht nach der Umlenkung in die Stirnfläche 31 des Lichtleiters 3 einzukoppeln.

**14.** Beleuchtungseinrichtung (11) mit mehreren Lichtquellen (1) gemäß einem der vorstehenden Ansprüche, sowie einer Steuerungseinrichtung (19) und einer Datenleitung (21), wobei die Steuerungseinrichtung (19) zur Ausgabe von Daten, die Farbwerte repräsentieren, ausgebildet ist, und wobei die Steuerungselektroniken (5) der Lichtquellen (1) über die Datenleitung (21) mit der Steuerungseinrichtung (19) verbunden sind, und wobei die Steuerungselektroniken (5) dazu eingerichtet sind, die über die Datenleitung (21) empfangenen Farbwerte als Sollwerte oder Sollbereiche abzuspeichern und die Helligkeit der Halbleiter-Lichtquellen (21, 22, 23, 24, 210, 211, 212) in Abhängigkeit vom Unterschied der Sensorsignale zu einem empfangenen Farbwert zu ändern.

**15.** Beleuchtungseinrichtung (11) gemäß dem vorstehenden Anspruch, wobei die Lichtleiter (3) der Lichtquellen (1, 2) mit ihren Stirnflächen (31, 32) zueinander beabstandet und die Halbleiter-Leuchtelemente (21, 22, 23, 24) im Zwischenbereich (25) zwischen den Stirnflächen (31, 32) angeordnet sind, so dass das Licht der Halbleiter-Leuchtelemente (21, 22, 23, 24) über die Stirnflächen (31, 32) in die Lichtleiter (3) eingekoppelt wird, und wobei zumindest ein Prisma (27, 29) am oder im Zwischenbereich (25) vorgesehen ist, welches so angeordnet und ausgebildet ist, dass dieses in einer ersten Reflexion von den Halbleiter-Leuchtelementen(21, 22, 23, 24) seitlich emittiertes Licht in Richtung von der Stirnfläche (31, 32) weg umlenkt und in einer zweiten Reflexion dieses umgelenkte Licht quer zur Längsrichtung des Lichtleiters (3) umlenkt und abgibt.

**Claims**

**1.** A light source (1) with

- at least two semiconductor light-emitting elements (21, 22, 23, 24, 210, 211, 212), the semiconductor light-emitting elements (21, 22, 23, 24, 210, 211, 212) emitting light of different colour, the light source comprising:
- a light guide (3) into which the light emitted by the semiconductor light-emitting elements (21, 22, 23, 24, 210, 211, 212) is injected, at least partially, and wherein the light guide (3) is configured such that the light injected by the semiconductor light-emitting elements (21, 22, 23, 24, 210, 211, 212) exits from the light guide (3) laterally;
- an electronic control unit (5) adapted to adjust the brightness of the semiconductor light-emitting elements (21, 22, 23, 24, 210, 211, 212); and
- a light sensor (7) arranged so as to receive the light injected by the semiconductor light-emitting elements (21, 22, 23, 24, 210, 211, 212) into the light guide (3) and laterally exiting therefrom, wherein a spacing is kept along the longitudinal extension of the light guide between the light sensor and the end face of the light guide, and wherein the electronic control unit (5) with the light sensor (7) is adapted to:
- accumulate the sensor signals over an integration time interval; and
- compare the accumulated signals of the light sensor (7) with a target value or target range and to modify the brightness of the semiconductor light-emitting elements (21, 22, 23, 24, 210, 211, 212) in response to the difference between the sensor signals and the target value or target range, and to alter the integration time interval in response to the difference between the sensor signal and the target value or target range or in response to a change in the target value.

**2.** The light source according to the preceding claim, **characterised in that** the electronic control unit (5) is adapted to alter the integration time interval in response to the difference to the target value or target range by setting a shorter integration time interval in the case of a greater difference than in the case of a smaller difference.

3. The light source (1) according to any one of the preceding claims, **characterised in that** the electronic control unit (5) is adapted to respond to a change in the target value or target range by shortening the integration time interval and subsequently re-extending it incrementally or continuously.

4. The light source (1) according to any one of the preceding claims, **characterised in that** the electronic control unit (5) is adapted to respond to a change in the target value or target range by pre-adjusting the brightness of the semiconductor light-emitting elements (21, 22, 23, 24, 210, 211, 212) on the basis of stored values and subsequently adjusting the colour location more precisely on the basis of a comparison of the sensor signals with the target value or target range.

5. The light source (1) according to any one of the preceding claims, **characterised by** a reflective element (9) which is arranged so as to reflect part of the light that is laterally emitted from the light guide, wherein the light sensor (7) is arranged so as to receive the light laterally emitted from the guide light and passing through the reflective element (9).

6. The light source (1) according to the preceding claim, **characterised in that** the reflective element (9) is defined by a reflective layer (91) extending around a circumferential portion of the light guide.

7. The light source (1) according to any one of the three preceding claims, **characterised in that** the reflective element (9) is designed so as to be at least partially diffusely reflective so as to scatter light conducted in the light guide (3) in such a manner that the light which is scattered and thereby diffusely reflected exits laterally from the light guide (3).

8. The light source (1) according to any one of the preceding claims, **characterised in that** the light sensor (7) is arranged so that it receives light which is laterally emitted at a distance from an end face (31) of the light guide measured along the light conducting direction of the light guide, which distance corresponds to at least twice, preferably at least three times the transverse dimension of the light guide (3).

9. The light source (1) according to any one of the preceding claims, **characterised in that** the semiconductor light-emitting elements (21, 22, 23, 24, 210, 211, 212) comprise a four-colour LED array including at least one red emitting, at least one green or yellow emitting, at least one blue emitting, and at least one white light emitting LED.

10. The light source (1) according to any one of the preceding claims, **characterised in that** the light sensor (7) has a plurality of sensor areas with different dichroic filters (71, 72) and an aperture stop limiting the angular range of the light laterally emitted from the light guide and incident on the sensor areas to less than 90°.

11. The light source (1) according to any one of the preceding claims, **characterised in that** the light guide has two end faces (31, 32) at opposite ends thereof, and wherein for both of the end faces (31, 32) at least two semiconductor light-emitting elements (21, 22, 23, 24, 210, 211, 212) are arranged at the end faces (31, 32) in a manner so that the light emitted therefrom is injected into the light guide (1) through the respective end face (31, 32).

12. The light source (1) according to the preceding claim, **characterised by** a first light sensor (7) and a second light sensor (8), wherein each of the light sensors (7, 8) is associated with a respective one of the end faces (31, 32) so that each of the light sensors (7, 8) receives a major proportion of the light injected into the end face the light sensor (7, 8) is associated with, and wherein the electronic control unit (5) is adapted to control the semiconductor light-emitting elements at each of the end faces (31, 32) independently from each other and on the basis of the sensor signals of the light sensor (7, 8) associated with the respective end face (31, 32).

13. The light source (1) according to any one of the preceding claims, wherein the light source (1) comprises a light conducting light mixer (40) into which light emitted by the semiconductor light-emitting elements (21, 22) is at least partially injected, wherein the longitudinal extension of the light mixer (40) along which it conducts the light from the semiconductor light-emitting elements (21, 22) extends transversely to the longitudinal extension of the light guide (3), and wherein a light deflecting means (43) is provided which redirects the light conducted in the light mixer (40) into the direction towards an end face (31) of the light guide (3) so that, after deflection, the light is injected into the end face (31) of the light guide (3).

14. A lighting device (11) comprising a plurality of light sources (1) according to any one of the preceding claims, and a control device (19) and a data line (20), wherein said control device (19) is adapted to output data that represent colour values, and wherein the electronic control units (5) of the light sources (1) are connected to the control device (19) via the data line (20), and wherein the electronic control units (5) are adapted to store the colour values received via the data line (20) as target values or target ranges and to modify the brightness of the semiconductor light-emitting elements (21, 22, 23, 24, 210, 211, 212) on the basis of the difference between the sensor signals and a received colour value.

15. The lighting device (11) according to the preceding claim, wherein the light guides (3) of the light sources (1, 2) are arranged with their end faces (31, 32) spaced apart from each other and the semiconductor light-emitting elements (21, 22, 23, 24) are arranged in the intermediate space (25) between the end faces (31, 32), so that the light from the semiconductor light-emitting elements (21, 22, 23, 24) is injected into the light guides (3) via the end faces (31, 32) thereof, and wherein at least one prism (27, 29) is provided adjacent to or in said intermediate space (25), which is arranged and adapted so that in a first reflection, light that is laterally emitted by the semiconductor light-emitting elements (21, 22, 23, 24) is deflected away from the end face (31, 32), and in a second reflection, this deflected light is deflected transversely to the longitudinal extension of the light guide (3) and is emitted.

**Revendications**

1. Source de lumière (1) comprenant :

    - au moins deux éléments luminescents à semi-conducteur (21, 22, 23, 24, 210, 211, 212), où les éléments luminescents à semi-conducteur (21, 22, 23, 24, 210, 211, 212) émettent une lumière de couleur différente, où la source de lumière
    - comprend un guide de lumière (3), dans lequel la lumière émise par les éléments luminescents à semi-conducteur (21, 22, 23, 24, 210, 211, 212) est injectée au moins en partie, et où le guide de lumière (3) est conçu de sorte que la lumière injectée par les éléments luminescents à semi-conducteur (21, 22, 23, 24, 210, 211, 212) sort latéralement du guide de lumière (3), et
    où la source de lumière (1) comprend en outre
    - une électronique de commande (5), au moyen de laquelle la luminosité des éléments luminescents à semi-conducteur (21, 22, 23, 24, 210, 211, 212) peut être réglée, ainsi que
    - un capteur de lumière (7), qui est agencé de manière à recevoir la lumière injectée par les sources de lumière à semi-conducteur (21, 22, 23, 24, 210, 211, 212) et sortant latéralement du guide de lumière (3), où un écart dans la direction longitudinale du guide de lumière entre le capteur de lumière et la surface frontale du guide de lumière est conservé, et
    où l'électronique de commande (5) pourvue du capteur de lumière (7) est configurée
    - pour accumuler les signaux de capteur pendant un intervalle de temps d'intégration, ainsi que
    - pour comparer les signaux accumulés du capteur de lumière (7) à une valeur théorique ou à une plage théorique et pour modifier la luminosité des éléments luminescents à semi-conducteur (21, 22, 23, 24, 210, 211, 212) en fonction de la différence entre les signaux de capteur et la valeur théoriqu'e ou la plage théorique, ainsi que pour modifier l'intervalle de temps d'intégration en fonction de l'écart entre le signal de capteur et la valeur théorique ou la plage théorique ou en fonction d'une modification de la valeur théorique.

2. Source de lumière selon la revendication précédente, **caractérisée en ce que** l'électronique de commande (5) est configurée pour modifier l'intervalle de temps d'intégration en fonction de l'écart par rapport à la valeur théorique ou à la plage théorique en réglant, pour un écart plus grand, un intervalle de temps d'intégration plus court que dans le cas d'un écart plus court.

3. Source de lumière (1) selon l'une quelconque des revendications précédentes, **caractérisée en ce que** l'électronique de commande (5) est configurée, en réponse à une modification de la valeur théorique ou de la plage théorique, pour raccourcir l'intervalle de temps d'intégration puis pour l'allonger à nouveau de manière graduelle ou continue.

4. Source de lumière (1) selon l'une quelconque des revendications précédentes, **caractérisée en ce que** l'électronique de commande (5) est configurée pour prérégler la luminosité des éléments luminescents à semi-conducteur (21, 22, 23, 24, 210, 211, 212) lors d'une modification de la valeur théorique ou de la plage théorique, sur la base de valeurs mises en mémoire, et pour ensuite régler la localisation chromatique de façon plus précise sur la base d'une comparaison des signaux de capteur par rapport à la valeur théorique ou à la plage théorique.

5. Source de lumière (1) selon l'une quelconque des revendications précédentes, **caractérisée par** un élément de réflexion (9), lequel est agencé de manière à réfléchir une partie de la lumière émise latéralement du guide de lumière, où le capteur de lumière (7) est agencé de manière à recevoir la lumière sortant latéralement du guide de lumière et traversant l'élément de réflexion (9).

6. Source de lumière (1) selon la revendication précédente, **caractérisée en ce que** l'élément de réflexion (9) est formé par une couche de réflexion (91), laquelle s'étend autour d'une partie de la périphérie du guide de lumière.

7. Source de lumière (1) selon quelconque l'une des trois revendications précédentes, **caractérisée en ce que** l'élément de réflexion (9) est réfléchissant au moins en partie de manière diffuse et diffuse la lumière guidée dans le guide de lumière (3), de sorte que la lumière diffusée et ainsi réfléchie de manière diffuse sort latéralement du guide de lumière (3).

8. Source de lumière (1) selon l'une quelconque des revendications précédentes, **caractérisée en ce que** le capteur de lumière (7) est agencé de manière à recevoir la lumière émise latéralement à une certaine distance d'une surface frontale (31) du guide de lumière le long de la direction de guidage de lumière du guide de lumière, où l'écart correspond au moins au double, de préférence au moins au triple de la dimension transversale du guide de lumière (3).

9. Source de lumière (1) selon l'une quelconque des revendications précédentes, **caractérisée en ce que** les éléments d'éclairage à semi-conducteur (21, 22, 23, 24, 210, 211, 212) comprennent un ensemble de diodes électroluminescentes de quatre couleurs, pourvu d'au moins une diode électroluminescente émettant du rouge, d'au moins une diode électroluminescente émettant du vert ou du jaune, d'au moins une diode électroluminescente émettant du bleu et d'au moins une diode électroluminescente émettant une lumière blanche.

10. Source de lumière (1) selon l'une quelconque des revendications précédentes, **caractérisée en ce que** le capteur de lumière (7) présente plusieurs champs de capteur pourvus de différents filtres dichroïques (71, 72) et d'un dispositif à diaphragme, lequel limite la plage angulaire de la lumière émise latéralement par le guide de lumière et venant frapper les champs de capteur à une valeur inférieure à 90°.

11. Source de lumière (1) selon l'une quelconque des revendications précédentes, où le guide de lumière présente deux surfaces frontales (31, 32) aux extrémités opposées, et où, pour les deux surfaces frontales (31, 32), respectivement au moins deux éléments luminescents à semi-conducteur (21, 22, 23, 24, 210, 211, 212) sont agencés sur les surfaces frontales (31, 32), de sorte que leur lumière émise est injectée dans le guide de lumière (1) à travers la surface frontale (31, 32) respective.

12. Source de lumière (1) selon la revendication précédente, **caractérisée par** un premier capteur de lumière (7) et un deuxième capteur de lumière (8), où les capteurs de lumière (7, 8) sont associés chacun à l'une des surfaces frontales (31, 32), de telle sorte que chacun des capteurs de lumière (7, 8) reçoit respectivement une plus grande part de la lumière injectée dans la surface frontale associée à ce capteur de lumière (7, 8), et où l'électronique de commande (5) est configurée pour régler les éléments luminescents à semi-conducteur sur chacune des surfaces frontales (31, 32) séparément les uns des autres et en fonction des signaux de capteur du capteur de lumière (7, 8) associé à la surface frontale (31, 32) respective.

13. Source de lumière (1) selon l'une quelconque des revendications précédentes, où la source de lumière (1) comprend un mélangeur de lumière (40) guidant la lumière, dans lequel la lumière émise par les éléments luminescents à semi-conducteur (21, 22) est injectée au moins en partie, où la direction longitudinale du mélangeur de lumière (40), le long de laquelle celui-ci dirige la lumière des éléments luminescents à semi-conducteur (21, 22), s'étend transversalement à la direction longitudinale du guide de lumière (3), et où un dispositif de déviation de lumière (43) est prévu, lequel dévie la lumière guidée dans le mélangeur de lumière (40) en direction d'une face frontale (31) du guide de lumière (3), afin d'injecter la lumière, une fois celle-ci déviée, dans la surface frontale (31) du guide de lumière (3).

14. Dispositif d'éclairage (11) comprenant plusieurs sources de lumière (1) selon l'une quelconque des revendications précédentes, ainsi qu'un dispositif de commande (19) et une ligne de transmission de données (21), où le dispositif de commande (19) est conçu pour sortir des données représentant des valeurs de couleur, et où les électroniques de commande (5) des sources de lumière (1) sont reliées au dispositif de commande (19) par l'intermédiaire de la ligne de transmission de données (21), et où les électroniques de commande (5) sont configurées pour mettre en mémoire les valeurs de couleur reçues par l'intermédiaire de la ligne de transmission de données (21) en tant que valeurs théoriques ou plages théoriques et pour modifier la luminosité des sources de lumière à semi-conducteur (21, 22, 23, 24, 210, 211, 212) en fonction de la différence entre les signaux de capteur et une valeur de couleur reçue.

**15.** Dispositif d'éclairage (11) selon la revendication précédente, où les guides de lumière (3) des sources de lumière (1, 2) sont mutuellement espacés par leurs surfaces frontales (31, 32) et les éléments luminescents à semi-conducteur (21, 22, 23, 24) sont agencés dans la zone intermédiaire (25) entre les surfaces frontales (31, 32), de sorte que la lumière des éléments luminescents à semi-conducteur (21, 22, 23, 24) est injectée dans les guides de lumière (3) par l'intermédiaire des surfaces frontales (31, 32), et où au moins un prisme (27, 29) est prévu sur ou dans la zone intermédiaire (25), lequel est agencé et conçu, au cours d'une première réflexion, pour dévier la lumière émise latéralement par les éléments luminescents à semi-conducteur (21, 22, 23, 24) dans une direction s'éloignant de la surface frontale (31, 32) et, au cours d'une deuxième réflexion, pour dévier et distribuer cette lumière déviée transversalement à la direction longitudinale du guide de lumière (3).

Fig. 1

7, 8

78

72

71

73

75

76    77

Fig. 2

I

|| , y, l|x, ||

t1        t2   t3    t4    t

Fig. 3

Fig. 4

Fig. 5

Fig. 6

EP 3 072 360 B1

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012130497 A1
- US 20100096993 A
- US 20060245174 A